# EUROPEAN PATENT APPLICATION

(11) **EP 4 371 942 A2**
(43) Date of publication of application: **22.05.2024**
(21) Application number: 24167706.1
(22) Date of filing: 19.12.2019
(51) Int. Cl.: C01G 49/00

(54) **SOLID ELECTROLYTE MATERIAL FOR LITHIUM SECONDARY BATTERY, ELECTRODE, AND BATTERY**

(30) Priority: 29.04.2019 CN 201910354433; 08.05.2019 CN 201910381153; 06.09.2019 CN 201910843347; 06.09.2019 CN 201910843405
(62) Divisional of application: 19926754.3
(71) Applicant: China Automotive Battery Research Institute Co, Ltd., Beijing 101407 (CN); The University of Western Ontario, London, ON N6A 3K7 (CA)
(72) Inventor: SUN, Xueliang, London, N6A 3K7 (CA); LI, Xiaona, London, N6A 3K7 (CA); LIANG, Jianwen, London, N6A 3K7 (CA); WANG, Changhong, London, N6A 3K7 (CA); HUANG, Huan, London, N6A 3K7 (CA); LU, Shigang, Beijing, 101407 (CN); ZHANG, Li, Beijing, 101407 (CN); ZHAO, Shangqian, Beijing, 101407 (CN)
(74) Representative: Dilg, Haeusler, Schindelmann Patentanwaltsgesellschaft mbH

(57) **Abstract**

A solid electrolyte material for a lithium secondary battery, an electrode, and a battery, relating in particular to an additive material capable of improving rapid transmission of ions in lithium secondary battery electrodes, a preparation method therefor and application thereof, and a solid electrolyte material for a secondary battery, a preparation method therefor and application thereof, as well as an electrode, an electrolyte thin layer, and a preparation method therefor.

## Description

### Cross-reference to related applications

The present application claims priority to Chinese Patent Application No. 201910354433X, entitled "Lithium secondary battery additive, preparation method and application thereof, filed on April 29, 2019, Chinese Patent Application No. 2019103811538, entitled "Secondary battery solid electrolyte material and the preparation method and application thereof, filed on May 8, 2019, Chinese Patent Application No. 2019108433475, entitled "Solid electrolyte material and all-solid-state battery" filed on September 6, 2019 and Chinese Patent Application No. 2019108434054, entitled "Electrode, electrolyte thin layer and preparation method thereof" filed on September 6, 2019, the entire disclosures of which are fully incorporated herein by reference.

### Technical Field

The present invention relates to a lithium secondary battery additive, a battery and an electrode, in particular to an additive material capable of improving rapid transmission of ions in lithium secondary electrodes, a preparation method therefor and application thereof, and a solid electrolyte material for a secondary battery, a preparation method therefor and application thereof, as well as an electrode, an electrolyte thin layer, and a preparation method therefor.

### Background Art

A lithium secondary battery is an ideal battery system in term of the energy density of batteries. However, up to now, the electrochemical performance of a lithium secondary battery is still limited by the transmission rate of ions and electrons in the electrode layer. In the preparation process of a lithium secondary battery electrode, the electron transmission channel of the electrode is mainly provided by adding conductive carbon and other electron highly conductive materials. On the other hand, the method of providing the ion transport channel of the electrode is different between the organic phase lithium secondary battery and the all-solid-state lithium secondary battery. Since the high permeability and wettability of organic electrolyte, in the process of electrode preparation, by preserving pores in the electrode layer and the like, the infiltration of the electrolyte in the electrode layer is achieved to realize the transmission of ions in the electrode layer. Although the addition of extra materials is avoided by the method, however, the existence of a large number of pores is also very significant for the reduction of the energy density of the battery. Meanwhile, it is difficult to obtain a thick electrode layer by this method, which further limits the load of electrode active materials. In an all-solid-state battery, because the solid electrolyte has no fluidity, the infiltrating contact problems between electrode active particles and electrolyte is more complicated than that in a liquid-phase battery. Therefore, the electrode layer applied to an all-solid-state battery needs to be additionally added with fast ion materials to obtain fast ion channels, and at present, the addition of corresponding solid electrolyte materials is commonly used. However, at present, the problems of chemical compatibility of solid electrolyte with electrode materials, air stability and solvent stability of solid electrolyte, and preparation processes of solid electrolyte make it difficult for solid electrolyte materials to be directly applied to electrode film forming process.

### Summary of the present invention

The present invention first provides a lithium secondary battery additive, which has high ionic conductivity and air stability, can improve the rapid transmission of electrode ions, increase the electrode load and thickness, is compatible with the existing electrode materials of a lithium secondary battery, and is expected to solve the problems such as slow ion transmission of electrode materials, low load of electrode materials, difficulty in further improving the electrode thickness and the like in a lithium secondary battery, so that it is expected to realize the preparation of electrode plates with high energy density and low electrode polarization, and further improving the energy density of a lithium secondary battery. Meanwhile, the lithium secondary battery additive has high ionic conductivity at room temperature, is stable in air and has a simple preparation method.

Specifically, the present invention provides a lithium secondary battery additive represented by the following formula,

Li_{b}MₐX_{c},

wherein M is one or more selected from B, Al, Ga, In, Y, Sc, Sb, Bi, Nb, Ta, Ti, Zr, V, Cr, Mo, W, Mn, Tc, Re, Fe, Co, Ni, Cu, Ag, Zn, Cd, La, Ce, Pr, Nd, Pm, Sm, Eu, Gd, Tb, Dy, Ho, Er, Tm, Yb and Lu, X is one or more selected from F, Cl, Br and I; 0.2≤b≤6; 0.1≤a≤3; and 1 <c<9.

In the specific embodiment of the present invention, b may be selected from 0.2, 0.5, 1, 2, 3, 4, 5 or 6, and more preferably, 1≤b≤3.

In the specific embodiment of the present invention, a may be selected from 0.1, 0.2, 0.5, 1, 1.5, 2, 2.5 or 3, and more preferably, 0.2≤a≤1.

In the specific embodiment of the present invention, c may be selected from 1, 2, 3, 4, 5, 6, 7, 8 or 9, and more preferably, 3≤c≤6.

In some preferred embodiments of the present invention, the lithium secondary battery additive is represented as follows,
Li₃Y_{1-d}In_{d}Cl₆, (glass-ceramic phase); wherein, 0≤d≤1; further, d is selected from 0, 0.1, 0.2, 0.3, 0.4, 0.5, 0.6, 0.7, 0.8, 0.9 or 1.0.

Further, the lithium secondary battery additive of the present invention may be in a form of a glass phase, a glass-ceramic phase or a crystalline phase.

In other preferred embodiments of the present invention, the lithium secondary battery additive is represented as follows,
Li₃InCl₆ (crystalline phase), Li₃NbCl₈ (glass phase) and Li₃InCl₆ (glass-ceramic phase).

The above-mentioned lithium secondary battery additive of the present invention may be prepared according to conventional techniques in the art.

For example, the lithium secondary battery additive may be prepared by mixing the required raw materials (or precursors) according to the proportion and then grinding; or further prepared into a corresponding phase state by adopting an organic solvent co-dissolution recrystallization method, a heating eutectic method and a method of contacting raw material particles in an insoluble hydrocarbon organic solvent.

Further, the raw materials (or precursors) for preparing the lithium secondary battery additive of the present invention include LiX and MX_{y} precursors, wherein the definitions of M and X are the same as above; 1≤y≤6, preferably, 2≤y≤5. For example, y may be selected from 1,2, 3, 4, 5, or 6.

Specifically, the mixing may be performed in the manner of using balls or beads, or in the manner of not using balls or beads. The mixing may be performed in an organic solvent, or may be carried out without using an organic solvent.

Further, the organic solvent may be a polar solvent or a nonpolar solvent. Solvents may dissolve, partially dissolve and not dissolve the above LiX and MX_{y} precursors. As nonpolar solvents, hydrocarbon solvents and ether solvents may be exemplified. As the hydrocarbon solvent, aliphatic hydrocarbon solvents and aromatic hydrocarbon solvents may be exemplified. Preferably, the hydrocarbon solvent is an aliphatic hydrocarbon solvent, and more preferably hexane. As an ether solvent, cyclic ether solvents and chain ether solvents may be exemplified, preferably cyclic ether solvents, and more preferably tetrahydrofuran.

Furthermore, in the process of preparing the lithium secondary battery additive of the present invention, for example, in the process of mixing required raw materials (or precursors), materials such as NH₄Cl, I₂, LiI, and S may be used as cosolvents, fluxing agents, or ligands of complexes. The advantage is that the reaction temperature can be reduced, and complex intermediates and the like can be formed, so as to be beneficial for obtaining products.

Further, the obtained glass phase or glass-ceramic phase intermediate product in the present invention may be transformed into glass-ceramic phase or crystalline phase by the method of heating annealing.

The temperature for heating annealing is 100to 600°C, preferably 150to 350°C. The time for heating annealing is usually 10 minutes to 24 hours, preferably 1 to 10 hours. Heating annealing can be carried out in an atmosphere such as air, nitrogen, argon and the like, or in a vacuum atmosphere.

Furthermore, volatile materials such as NH₄Cl, I₂, LiI, S, P, ferrocene, etc. may be added during the heating annealing to control the phase and morphology. The advantage is that the annealing temperature can be reduced and ionic conductivity of materials is beneficially improved at the same time.

The present invention also includes the lithium secondary battery additive prepared by the above methods.

The present invention also includes the use of the lithium secondary battery additive as an electrode additive in a lithium secondary battery or in the preparation of a lithium secondary battery. The use of the additive of the present invention can improve the ion transmission speed of the electrode, and is compatible with the electrode material of the existing lithium secondary battery.

The present invention also provides a lithium secondary battery, wherein at least one of the positive electrode layer, the electrolyte layer and the negative electrode layer of the battery contains one or more of the above lithium secondary battery additives.

In the present invention, the lithium secondary battery includes a liquid-phase lithium secondary battery, a half-solid-state lithium secondary battery and an all-solid-state lithium secondary battery.

The lithium secondary battery of the present invention may be prepared according to conventional methods in the art.

The lithium secondary battery additive provided by the present invention may be used as an additive material for improving the rapid transmission of electrode ions. Accordingly, the material may be applied not only to an organic phase lithium secondary battery, but also to an all-solid-state lithium secondary battery or a half-solid-state lithium secondary battery. The lithium secondary battery additive provided by the present invention has the following advantages:
1. The electrode additive material provided by the present invention is stable under air conditions, and does not chemically react with solvents such as NMP (N-methyl pyrrolidone) and binders such as PVDF (polyvinylidene fluoride) used in the preparation process of electrode plates of a lithium secondary battery. Furthermore, it is chemically compatible with existing electrode materials for a lithium secondary battery, such as sulfur, lithium sulfide, lithium cobaltate, lithium manganate, lithium iron phosphate, lithium nickel manganese cobaltate, high-voltage phase lithium nickel manganate and lithium-rich phase manganese-based electrode materials. The electrode additive material can be directly applied to the existing mature electrode preparation process.
2. The electrode additive material provided by the present invention has the characteristic of high ionic conductivity at room temperature, and after being mixed with the active electrode material, the rapid conduction of lithium ions between the active electrode material and electrolyte can be improved. Therefore, the addition of the material is beneficial to reduce the interfacial impedance between active particles in the electrode plate and between active particles and electrolyte, thereby improving the rate performance and the load of active materials of the lithium secondary battery, and is beneficial to further improving the energy density of the lithium secondary battery.
3. The electrode additive material provided by the present invention has a wide working temperature and electrochemical inertia, the electrochemical window reaches more than 6 volts, and the electrode additive material will not decompose during the charging and discharging process of the battery. Meanwhile, the material has a simple preparation method and is easy to use in lithium secondary batteries.

An all-solid-state secondary battery has higher safety than the current commercial organic phase secondary battery. This is because the all-solid-state secondary battery uses nonflammable solid fast ionic materials as electrolyte. With the development in recent years, several solid electrolyte materials with ionic conductivity higher than 1 mS cm⁻¹ have been developed. These materials are mainly sulfide and oxide electrolytes. In which sulfide electrolyte includes Li₁₀Ge₂P₂S₁₂, Li₆PS₅Cl, Li₇P₃S₁₁ and Li₃PS₄ and the like; and the oxide electrolyte mainly includes Li_{1.3}Al_{0.3}Ti_{1.7}(PO₄)₃, Li₇La₃Zr₂O₁₂ and the like. However, sulfide electrolyte is unstable in air and water, and is prone to generate toxic gases such as hydrogen sulfide, so it needs to be operated in an environment with inert gas as protective atmosphere; the oxide electrolyte needs to be phase-formed under high temperature conditions, and the phase-forming temperature is above 1000°C, so it is difficult to prepare and produce them in large quantities.

To this end, the present invention also provides a solid electrolyte material for a secondary battery, which has high ionic conductivity (higher than 1 mS cm⁻¹), is stable in air and water, and is compatible with commercially used oxide cathode materials such as LCO, NMC and the like. It is expected to solve the problems of complex process, time-consuming and energy-consuming, high price and the like faced in the macro-scale preparation of solid electrolyte materials in an all-solid-state secondary battery. Further, it can solve the problems of chemical and electrochemical instability of solid electrolyte materials in an all-solid-state secondary battery, thereby realizing the commercial application value of the all-solid-state secondary battery.

Specifically, the present invention provides a solid electrolyte material for a secondary battery represented by the following formula,

A_{1-3z}In_{z}X ;

wherein, A is one or more selected from Li, Na, K and Cs; X is one or more selected from F, Cl, Br and I; and 0<z≤0.33.

Further, 0.1≤z≤0.25; for example, specifically, z may be selected from 0, 0.25, 0.2, 0.167, 0.143 or 0.1.

In some preferred embodiments of the present invention, the solid electrolyte material is represented by any one of the following formulas,

Li₄InCl₇;

Li₃InCl₅F;

Li_{1.3z}In_{z}Cl,

z is 0.25, 0.2, 0.167, 0.143 or 0.1;

Na₃InCl₄Br₂.

Furthermore, in the solid electrolyte material of the present invention, wherein In may be partially or completely replaced by the following elements to form a new electrolyte material, and the elements that may be used for substitution are one or more of Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd, and Mg.

In some preferred embodiments of the present invention, the solid electrolyte material is represented by any one of the following formulas: Li₃In_{0.8}Y_{0.2}Cl₆, or Li₂In_{0.1}Zn_{0.9}Cl_{4.1}, or LiGaCl₄, or Li₆FeCl₈, or Li₃YCl₆, or Li₃BiCl₆.

Further, the solid electrolyte material of the present invention may be in a form of a glass phase, a glass-ceramic phase or a crystalline phase.

Further, the solid electrolyte material of the present invention comprises a principal crystalline phase, and the crystalline phase has a distorted rock salt phase structure.

Further, the solid electrolyte material of the present invention may contain a heterogeneous crystalline phase, which has a different crystal structure arrangement from the principal crystalline phase.

Further, the solid electrolyte material of the present invention may contain an amorphous phase.

Generally, the above solid electrolyte materials of the present invention can be prepared according to conventional techniques in the art.

Specifically, the solid electrolyte material is prepared by a liquid phase method. The raw materials (or precursors) used include but are not limited to AX, InX₃ and MXₐ; wherein the definitions of A and X are the same as above; M is one or more of Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd and Mg; and 2≤a≤4.

Preferably, the raw materials AX, InX₃ and MXₐ may be expanded into the corresponding hydrates or solutions thereof. Alternatively, the raw materials AX, InX₃ and MXₐ may be expanded to precursors that can dissociate or react in liquid phase with equivalent ionic effects, and the precursors include but are not limited to carbonates and bicarbonates.

Further, HCl, NH₄Cl and the like may be appropriately added as hydrolysis inhibitors or complexing agents in the preparation process of the above liquid phase method.

Further, the above-mentioned liquid phase method specifically comprises: dissolving the required raw materials or precursors in a certain proportion in the liquid phase, wherein the mass ratio of the required raw materials or precursors to the liquid phase is 1:0.5 to 1:15, preferably 1:2 to 1:5.

Further, in the above-mentioned liquid phase method, the required raw materials or precursors may be dissolved in the liquid phase at room temperature, and after all the components are dissolved, the resultant is subjected to drying to obtain the solid electrolyte material. The above drying temperature is usually 60 to 100°C, and the drying may be carried out under vacuum or non-vacuum conditions. For example, in an oven.

Further, in the above liquid phase method, annealing treatment may be further performed after drying, and the temperature for annealing is 100 to 600°C, preferably 120 to 500°C. The advantage lies in improving the degree of crystallinity of the material, which is conducive to improving the stability and ionic conductivity of the material.

The annealing is carried out in an air atmosphere, and may also be carried out in an inert gas atmosphere or a vacuum atmosphere.

Further, in the above preparation method, not only deionized water, but also an organic solvent or a mixed solvent of organic solvent/water may be used for the liquid phase.

Further, the organic solvent in the above preparation method is alcohol, such as ethanol.

The present invention also includes a solid electrolyte material prepared by the above method.

The solid electrolyte material of the present invention may be used as an additive of a secondary battery, and may also be used as an electrolyte of a secondary battery.

The present invention also includes the use of the above solid electrolyte material in the preparation of a secondary battery. The use of the solid electrolyte material of the present invention can improve the electrode ion transmission speed, and the solid electrolyte material is compatible with the existing secondary battery electrode material.

The present invention also provides a secondary battery, the battery comprises a positive electrode (layer), a negative electrode (layer) and an electrolyte layer between the positive electrode (layer) and the negative electrode (layer); at least one of the positive electrode (layer), the negative electrode (layer) and the electrolyte layer includes one or more of the above solid electrolyte materials.

The secondary battery in the present invention comprises a lithium secondary battery and a sodium secondary battery.

The secondary battery of the present invention may be prepared according to conventional method in the art.

The solid electrolyte material provided by the present invention is stable in air and liquid phase and does not decompose; its ionic conductivity may be higher than 1 mS cm⁻¹; it has wide working temperature and electrochemical inertness, and its electrochemical window is over 5 volts, it is stable to the oxide positive electrode, and does not decompose in the process of battery charging and discharging, and is easy to be applied in a secondary battery.

The solid electrolyte material provided by the present invention has a low phase forming temperature, and can even form a phase by ball milling or drying in a liquid phase at room temperature; the preparation method thereof is simple, and it is easy to prepare and apply in large quantities.

Halide electrolyte materials, such as Li₃YCl₆ and Li₃InCl₆ are stable with the high-voltage positive electrode, can be operated in the drying room, and the materials are soft and easy to mold and process, and are expected to be industrially applied. However, the ionic conductivity of halide electrolyte materials is generally low, so it is necessary to further improve its ionic conductivity. The electrolyte material of Li₃InCl₆ was reported as early as 1992, and its ionic conductivity at room temperature is only 10⁻⁵ S/cm (Zeitschrift für anorganische und allgemeine Chemie 1992, 613, 26-30.), which cannot meet the needs of a lithium secondary battery well.

To this end, the present invention also provides a solid electrolyte material with high lithium ionic conductivity.

In practice, the inventor of the present invention found that the lithium ion conductivity can be improved by adjusting the atomic arrangement in the crystal structure, thus obtaining an indium-based halide electrolyte material with ionic conductivity of more than 10⁻³ S/cm (room temperature). Compared with Li₃InCl₆ electrolyte material previously reported, the indium-based halide electrolyte Li_{3b-3a}InₐCl₃ material obtained by structural adjustment has higher ionic conductivity. Moreover, the solid electrolyte material obtained in the present invention is compatible with commercially used oxide cathode materials such as LCO and NMC, and is stable to air. It is expected to solve the problem of low ionic conductivity faced in commercial use of halide solid electrolyte materials in an all-solid-state secondary battery, and it is further expected to solve the problems of complex manufacturing process and high price in the existing manufacturing process. In addition, the present invention can further solve the problems of chemical and electrochemical instability of solid electrolyte materials in an all-solid-state secondary battery. Thereby realizing the commercial application value of the all-solid-state secondary battery.

Specifically, the present invention provides a solid electrolyte material, which has the composition represented by Li_{3b-3a}InₐCl₃, wherein 0.2≤a≤0.8, and 0.9≤b≤1.15; and the solid electrolyte material further has a first crystalline phase which has peaks at positions of 2θ=14.6°±0.15°, 16.7°±0.15° and 34.3°±0.15° in X-ray diffraction measurement using copper Kα rays.

According to the present invention, in the first crystalline phase, the arrangement of atoms is similar to the distorted LiCl crystal structure, and the arrangement of Cl ions is similar to the arrangement of Cl ions in the distorted LiCl crystal structure. Li ions, vacancies and indium ions are arranged at Li site in the distorted LiCl crystal structure.

According to the present invention, in the first crystalline phase, the occupying positions of the indium ions and the lithium ions are not at the same position.

According to the present invention, in the first crystalline phase, the vacancy arrangement has two types, one is collocated with indium ions, and the other is not collocated with any ions.

According to the present invention, in the first crystalline phase, the X-ray intensity of the (001) plane in the crystal structure is set to I₍₀₀₁₎, and the X-ray intensity of the (131) plane in the crystal structure is set to I₍₁₃₁₎, meanwhile, I₍₀₀₁₎/I₍₁₃₁₎>0.6 is satisfied. Preferably, I₍₀₀₁₎/I₍₁₃₁₎>0.8.

According to the present invention, in the first crystalline phase, the X-ray intensity of the (001) plane in the crystal structure is set to I₍₀₀₁₎, and the X-ray intensity of the (110) plane in the crystal structure is set to I₍₁₁₀₎, meanwhile, I₍₁₁₀₎/I₍₀₀₁₎<0.85 is satisfied. Preferably, I₍₁₁₀₎/I₍₀₀₁₎<0.65.

Further, the solid electrolyte material of the present invention further comprises a heterogeneous crystalline phase having a peak at a position of 2θ=10.8°C±0.2°C in X-ray diffraction measurement using copper Kα rays.

According to the present invention, the heterogeneous crystalline phase has a different crystal structure from the first crystalline phase, and the heterogeneous crystalline phase is interposed between the first crystalline phase.

Further, the solid electrolyte material of the present invention further comprises an amorphous phase.

According to the present invention, the amorphous phase is interposed between the first crystalline phase.

According to the present invention, in the solid electrolyte material, 0.3≤a≤0.7, 0.95≤b≤1.10; for example, specifically, a may be 0.53, and b may be 1.03.

The solid electrolyte material of the present invention has higher ionic conductivity due to the above-mentioned first crystalline phase; especially when the solid electrolyte material further has the above-mentioned heterogeneous crystalline phase and amorphous phase, it may also be compatible with commercial used oxide cathode materials such as LCO and NMC, and is stable to air.

Generally speaking, the solid electrolyte material of the present invention has an ionic conductivity (room temperature) of > 10⁻³ S/cm.

In some embodiments of the present invention, the solid electrolyte material has an ionic conductivity of 0.7 to 2.5 mS/cm.

In some embodiments of the present invention, the solid electrolyte material has an ionic conductivity of 1.0 to 2.0 mS/cm.

In some specific embodiments of the present invention, the solid electrolyte material has a composition represented by Li_{1.5}In_{0.53}Cl₃, and after detecting, the ionic conductivity of the material under the condition of room temperature is 2 mS/cm.

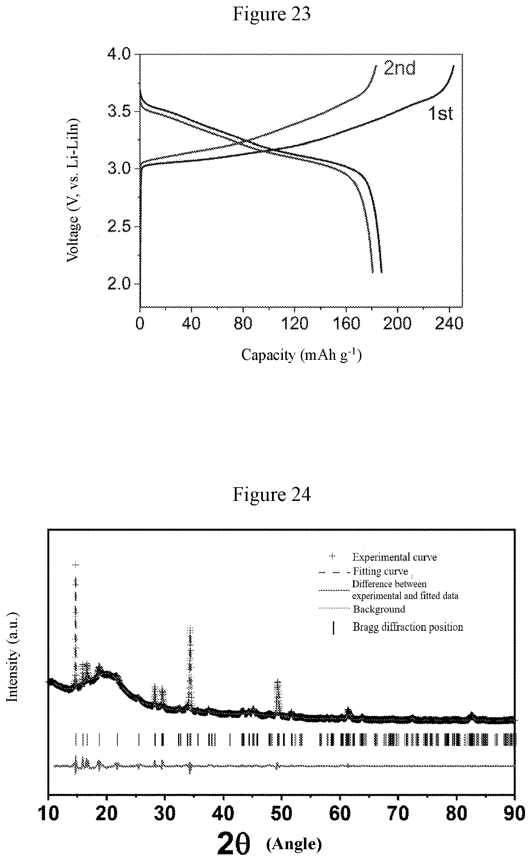

In some embodiments of the present invention, the X-ray diffraction (measured using copper Kα rays) pattern of the solid electrolyte material is shown in Figure 24 below.

Specifically, the solid electrolyte material of the present invention may be prepared by a liquid phase method. The raw materials (or precursors) used include a lithium source and an indium source, wherein the lithium source includes LiCl, Li₂CO₃, LiHCO₃, LiOH or lithium acetate; and the indium source include InCl₃, InCl₃·4H₂O, In₂O₃ and InOCl.

Further, in the preparation process of the liquid phase method, HCl, NH₄Cl and the like may be appropriately added as hydrolysis inhibitors or complexing agents.

Further, the liquid phase method specifically comprises: dissolving the required raw materials or precursors in a certain proportion in the liquid phase.

Further, in the liquid phase method, the required raw materials or precursors may be dissolved in the liquid phase under the condition of room temperature, and after all the components are dissolved, the resultant is subjected to drying to obtain solid electrolyte material. The temperature for drying is usually 60 to 100°C, for example 80°C, and drying may be carried out under vacuum or non-vacuum conditions. For example, in an oven. The dried samples need to be further dehydrated under vacuum, and the temperature for dehydration is 100 to 300°C, preferably 120 to 250°C.

Further, in the liquid phase method, annealing treatment may be further performed after drying, and the temperature for annealing is 300 to 600°C, preferably 350 to 550°C. The advantage lies in improving the degree of crystallinity of the material, which is conducive to improving the stability and ionic conductivity of the material.

The annealing is carried out in an air atmosphere, and may also be carried out in an inert gas atmosphere or a vacuum atmosphere.

Furthermore, in the preparation method, not only deionized water, but also an organic solvent or a mixed solvent of organic solvent and water may be used for the liquid phase.

Further, the organic solvent in the preparation method is alcohol, such as ethanol.

In the present invention, an all-solid-state lithium battery having a cathode active material layer, an anode active material layer, and a solid electrolyte layer formed between the cathode active material layer and the anode active material layer is further provided, wherein at least one of the cathode active material layer, the anode active material layer and the solid electrolyte layer contains the above-mentioned solid electrolyte material.

According to the present invention, by using the above solid electrolyte material, an all-solid-state lithium battery with high output characteristics may be manufactured. Further, the all-solid-state lithium battery also has higher chemical and electrochemical stability.

The solid electrolyte material provided by the present invention at least achieves the technical effect of high lithium ion conductivity, and further achieves the technical effect of having chemical and electrochemical stability.

Compared with the current commercial liquid phase secondary battery, the all-solid-state secondary battery has higher safety and higher energy density. This is because the all-solid-state secondary battery uses nonflammable solid fast ion conductor material as electrolyte. With the development in recent years, several solid electrolyte materials with ionic conductivity higher than 1 mS cm⁻¹ have been developed. Especially sulfide solid electrolytes represented by Li₁₀Ge₂P₂S₁₂, Li₆PS₅Cl, Li₇P₃S₁₁ and Li₃PS₄. However, sulfide electrolyte is extremely sensitive to air and water, and is easy to produce toxic gases such as hydrogen sulfide, so it needs to be produced and operated in an environment with inert gas as a protective atmosphere, which increases the production cost and limits the large-scale production and application capacity thereof; secondly, the electrochemical stability window of sulfide electrolyte is narrow (1.7 to 2.8 V), and interface reaction will occur with oxide electrode materials (such as LiCoO₂, NMC, and Graphite), so interface modification (surface coating of electrode materials) becomes indispensable in a sulfide-based all-solid-state battery. In addition, due to the chemical instability of sulfide, sulfide electrolyte is easy to react with polar solvents, so the solvents and binders that may be selected in the process of electrode preparation such as slurry preparation and electrode coating are very limited. Due to the above shortcomings, the capacity of large-scale production and application of the sulfide-based all-solid-state battery is very limited. Based on this, the present invention is further proposed.

The present invention also provides an electrode (in particular to an electrode based on a halide solid electrolyte material) and a preparation method thereof. The present invention also provides an electrolyte thin layer (in particular to an electrolyte thin layer based on a halide solid electrolyte material) and a preparation method thereof. The present invention also provides a battery containing the electrode or the electrolyte thin layer. In the present invention, the electrode or electrolyte thin layer is prepared by using the solid electrolyte material as the ion conduction additive, and one of the remarkable advantages is that the production operation may be performed without inert atmosphere, and the prepared electrode and electrolyte layer are stable in air.

Particularly, the electrode of the present invention refers to an electrode used in a secondary battery, especially a lithium/lithium ion secondary battery (including an all-solid-state battery and a liquid-phase battery).

The present invention provides an electrode, the components of which mainly comprises a solid electrolyte material, an electrode material, a conductive agent and a binder;

The solid electrolyte material may be a material represented by LiₐMX_{b}, wherein M is one or more of Al, Ho, Ga, In, Sc, Y and La, X is one or more of F, Cl and Br, 0≤a≤10, and 1<b<13.

In a specific embodiment of the present invention, the solid electrolyte material may be one or more selected from Li₃InCl₆, Li₃YCl₆, Li₃YBr₆, Li₃HoCl₆, Li₃ScCl₆ and the like.

The electrode material is a cathode material or an anode material; further, the cathode material may be traditional oxide cathode materials such as LiCoO₂, NMC (nickel-cobalt-manganese ternary lithium ion oxide material) and LiFePO₄, or may also be sulfur cathode materials such as sulfur, lithium sulfide (Li₂S) and polyacrylonitrile sulfide; the anode material may be graphite, silicon and other anode materials.

The conductive agent may be conventionally selected in the art, such as one or more of conductive carbon black, carbon nanotubes, acetylene black, graphene and the like.

The binder may be conventionally selected in the art, for example, it may be an aqueous binder such as aqueous dispersion of acrylonitrile multipolymer (LA 132, LA133 and the like), sodium carboxymethyl cellulose (CMC) and styrene butadiene rubber (SBR), sodium alginate (SA), or an oil-based binder such as polyvinylidene fluoride (PVDF), polyvinylpyrrolidone (PVP) and the like.

The electrode of the present invention may also include other functional additives commonly used in the art.

Further, the electrode of the present invention also includes a current collector, specifically it may be conventionally selected in the art. For example, the current collector may be made of aluminum foil (cathode), aluminum mesh (cathode), carbon coated aluminum foil (cathode), carbon paper (cathode and anode), stainless steel (cathode and anode), titanium mesh (cathode and anode) or copper foil (anode).

Further, the content of electrode material in the electrode provided by the present invention may be from 50 wt% to 98 wt%, preferably from 70wt% to 95 wt%; and/or the content of the solid electrolyte material may be from 2 wt% to 50 wt%, preferably from 5 wt% to 30 wt%, and/or the content of the conductive agent may be from 1 wt% to 10 wt%, and/or the content of the binder may be from 1 wt% to 10 wt%.

Further, when preparing the electrode provided by the present invention, in addition to adding the solid electrolyte material directly, the precursors (such as LiCl and MCl₃) thereof may also be added directly, so as to form the solid electrolyte material in the slurrying process directly. Among them, the solvent used in the slurrying process may be water, or one or more organic solvents such as ethanol, NMP and n-heptane; and the prepared slurry may be vacuum dried at 50 to 300°C. The slurry preparation process does not require inert atmosphere protection; an inert atmosphere such as nitrogen and Ar gas may also be used. The slurry preparation process may or may not be carried out in the drying room.

Further, the electrode material of the present invention may be traditional electrode materials such as commercialized LiCoO₂ and NMC, without additional surface coating, or may also be a coated electrode material.

Further, the electrode materials used in the electrode provided by the present invention may not need to undergo a special surface coating, or may be modified by a surface coating layer, and the surface coating layer may be a surface coating obtained by ALD deposition, including Li-Nb-O, Li-Ta-O, Li-P-O, Li-Si-O and Li-Ti-O therein; it may also be a surface coating material synthesized by sol-gel method and a surface coating layer obtained by molecular layer deposition technology, which includes but is not limited to polyethylene glycol aluminum (Alucone), poly uric acid (ployurea) and poly 3,4-ethylene dioxythiophene (PEDOT); it may also be a surface coating layer synthesized by sol-gel method, including but not limited to Li-Nb-O, Li-Ta-O and Li-Nb-Ta-O.

In some embodiments of the present invention, the electrode material is wrapped in the solid electrolyte material; wherein the weight ratio of the electrode material to the solid electrolyte material is 95:5, 90:10, 85:15, 80:20, 70:30, and more preferably 85:15. Research has found that the advantages of wrapping the electrode material in the solid electrolyte material for the electrode provided by the present invention lie in that the solid-solid contact between the solid electrolyte and the electrode is improved, the utilization rate of the electrode active material in the solid battery is increased, and the content of the electrolyte in the solid-state electrode in the electrode is reduced, thereby improving the energy density of the all-solid-state battery.

In the present invention, the preparation method of wrapping the electrode material in the solid electrolyte material to form a composite electrode material is as follows:
dissolving the solid electrolyte material or the precursor thereof in water, adding the electrode material, mixing uniformly, drying (for example, drying under the condition of 100°C), and further vacuum dehydration drying (for example, under the condition of 200°C). Alternatively, the preparation method is as follows:
dissolving the solid electrolyte material or the precursor thereof and the electrode material in an organic solvent, ultrasonically dispersing and drying (for example, drying under the condition of 100°C), and then further vacuum desolventizing and drying (for example, under the condition of 200°C for about 5 hours).

The electrode provided by the present invention may be prepared by conventional methods in the art. In the preparation method thereof, inert atmosphere protection is usually not needed in the whole preparation process, which is convenient for actual production operation. However, the existing sulfide electrolyte must be operated and produced in inert atmosphere.

The present invention may also directly start from the precursor and directly coat the halide electrolyte material on the electrode material in situ. However, the sulfide electrolyte is a solid electrolyte synthesized under harsh conditions, and then dispersed in electrode materials. In comparison, the in-situ coating method provided by the present invention is simpler and more convenient, and the solid-solid contact between the electrode material and the electrolyte is improved.

In addition, the electrode provided by the present invention has the advantages in that the solid electrolyte material has good solid-solid contact with electrolyte, the utilization rate of active materials is close to 100%, and the content of solid electrolyte in the electrode is less (< 15%) (the content of solid electrolyte in solid electrode reported in current literature is nearly 30%), in the electrode of an all-solid-state battery, reducing the content of solid electrolyte will significantly increase the energy density of the battery.

In addition, the electrode provided by the present invention may be prepared into conventional shapes or forms in the art as required.

The present invention also provides an electrolyte thin layer, which mainly comprises a solid electrolyte material and a binder; wherein the solid electrolyte material and the binder may have the same meanings as above. The solvent used in the preparation process may also be the same as above.

The electrolyte thin layer provided by the present invention has the outstanding advantage that the thickness is small, and generally the thickness may be less than 50 µm. In some specific embodiments of the present invention, the thickness of the electrolyte thin layer provide is 20 to 200 µm.

Since the electrolyte thin layer of the present invention has lower thickness, the energy density of an all-solid-state battery may be significantly improved when the electrolyte thin layer is used in the solid-state battery.

The electrolyte thin layer of the present invention may be prepared by conventional methods in the art; and the preparation process does not need inert atmosphere protection. The preparation of the electrolyte thin layer may be implemented by using liquid phase or organic phase as solvent and binder.

In some specific embodiments of the present invention, the preparation method of the electrolyte thin layer is as follows:
dissolving the binder in a solvent, and then adding the solid electrolyte material or the precursor thereof (for example, LiCl, and MCl₃) and a conductive agent to prepare a slurry (the concentration of the slurry may be adjusted by adjusting the amount of the solvent), and then applying the resultant on a current collector or a flexible substrate, drying (e.g., vacuum drying under a condition of 100 to 110°C), and then peeling off from the current collector or flexible substrate.

Further, the current collector may be copper foil; the flexible substrate may be nickel mesh, PEO film and the like.

Further, in the electrolyte thin layer provided by the present invention, the content of the solid electrolyte material may be from 20 wt% to 100 wt%, preferably from 45 wt% to 99 wt%; The content of the binder may be from 0 to 80 wt%, preferably from 1 wt% to 55 wt%;
Further, the electrolyte thin layer provided by the present invention may adopt a flexible substrate, such as PEO thin film, glass fiber and the like, as a self-supporting thin film.

The present invention also includes the use of the solid electrolyte material in the preparation of an electrode or an electrolyte thin layer.

The solid electrolyte material provided by the present invention may be synthesized in an aqueous solution. At present, there is no report that solid electrolyte can be synthesized in a liquid phase. The solid electrolyte material provided by the present invention may be synthesized in an aqueous solution. In the present invention, a solid electrolyte may be synthesized using a water-based binder, and water is used as a solvent, or a solid electrode and a solid electrolyte layer may be prepared by using water, which is of low cost and environmentally friendly.

In some examples of the present invention, the solid electrolyte material used in the above electrode or the above electrolyte thin layer may also be the solid electrolyte material with the above composition represented by Li_{3b-3a}InₐCl₃, wherein 0.2≤a≤0.8, and 0.9≤b≤1.15; it also has a first crystalline phase which has peaks at positions of 2θ=14.6°±0.15°, 16.7°±0.15° and 34.3°±0.15° in X-ray diffraction measurement using copper Kα rays. With regard to the solid electrolyte material with the composition represented by Li_{3b-3a}InₐCl₃, please refer to the above and the following examples and drawings.

The present invention also includes the use of the electrode or the electrolyte thin layer in the preparation of a battery, especially a secondary battery, especially a lithium/lithium ion secondary battery (including an all-solid-state battery and a liquid-phase battery).

The present invention also provides a secondary battery, especially a lithium/lithium ion secondary battery (including an all-solid-state battery and a liquid-phase battery), which comprises the above electrode or comprises the above electrolyte thin layer; further comprises the other conventional components of a secondary battery.

The electrode and electrolyte thin layer provided by the present invention have the following advantages:
(1) the electrode may be coated with water as solvent;
(2) the ionic conductivity may reach 1.5×10⁻³ S/cm or more,
(3) the production operation does not need inert atmosphere protection, which reduces the production cost, and the process is simple;
(4) the obtained electrode has certain mechanical flexibility;
(5) it is very compatible with the current lithium ion battery production process;
(6) a solid electrolyte may be synthesized in situ on the electrode material (one-step method) to form a structure in which the electrode material is coated by the solid electrolyte, thereby improving the solid-solid contact between the electrode and the solid electrolyte, increasing the utilization rate of active materials in an all-solid-state battery, reducing the content of solid electrolyte in a solid-state electrode, and thereby improving the energy density of a solid-state battery

The present invention uses an all-solid-state electrolyte material of air-stable, high-ion-conducting that is easy to be prepared in macro quantity as an additive for ion conduction of an all-solid-state battery; and due to the compatibility between a solid electrolyte material and an oxide electrode material (such as LCO, and NMC), the traditional cathode materials do not need additional interface modification. In the manufacturing process of electrode and electrolyte, there is no need for inert atmosphere protection, and it is very compatible with traditional electrode manufacturing technology, simple in process, low in cost, and has extremely large-scale production capacity, thus having great commercial application value.

### Brief Description of the Drawings

Fig. 1 is an X-ray diffraction pattern of glass-ceramic phase Li₃Y_{1-d}In_{d}Cl₆(d=0.2) additive in Example 1.1;
Fig. 2 is a temperature-dependent ionic conductivity diagram of glass-ceramic phase Li₃Y_{1-d}In_{d}Cl₆ (d=0.2) additive in Example 1.1;
Fig. 3 shows the change curve of the value of d in glass-ceramic phase Li₃Y_{1-d}In_{d}Cl₆ additive in Example 1.1 and the ionic conductivity of corresponding products.
Fig. 4 is an X-ray diffraction pattern of crystalline phase Li₃InCl₆ in Example 1.2;
Fig. 5 is a temperature-dependent ionic conductivity diagram of crystalline phase Li₃InCl₆ in Example 1.2;
Fig. 6 is a charge and discharge curve of the all-solid-state LiIn-LiCoO₂ secondary battery in Application Example 1.1.
Fig. 7 is a charge and discharge curve of the all-solid-state LiIn-NMC811 secondary battery in Application Example 1.1.
Fig. 8 is a charge and discharge curve of the liquid-phase Li-LCO secondary battery in Application Example 1.2;
Fig. 9 is an X-ray diffraction pattern of z=1/7 (Li₄InCl₇) obtained in aqueous solution in Example 2.1;
Fig. 10 is a temperature-dependent ionic conductivity diagram of Li₄InCl₇ obtained in aqueous solution in Example 2.1;
Fig. 11 is a temperature-dependent ionic conductivity diagram of Li₃InCl₅F obtained in aqueous solution in Example 2.2;
Fig. 12 is a graph showing the relationship between ionic conductivity at room temperature and z of Li_{1-3z}In_{z}Cl (0.1≤z≤0.25) obtained in Example 2.3;
Fig. 13 is an X-ray diffraction pattern of glass-ceramic phase Li₃In_{0.8}Y_{0.2}Cl₆ solid electrolyte material obtained in Example 2.5;
Fig. 14 is a temperature-dependent ionic conductivity diagram of glass-ceramic phase Li₃In_{0.8}Y_{0.2}Cl₆ solid electrolyte material obtained in Example 2.5;
Fig. 15 is an X-ray diffraction pattern of glass-ceramic phase Li₂In_{0.1}Zn_{0.9}Cl_{4.1} solid electrolyte material obtained in Example 2.6;
Fig. 16 is an X-ray diffraction pattern of glass-ceramic phase LiGaCl₄ solid electrolyte material obtained in Example 2.7;
Fig. 17 is an impedance curve of glass-ceramic phase LiGaCl₄ solid electrolyte material obtained in Example 2.7 at room temperature;
Fig. 18 is an X-ray diffraction pattern of glass-ceramic phase Li₆FeCl₈ solid electrolyte material obtained in Example 2.8;
Fig. 19 is an impedance curve of glass-ceramic phase Li₆FeCl₈ solid electrolyte material obtained in Example 2.8 at room temperature;
Fig. 20 is an X-ray diffraction pattern of glass-ceramic phase Li₃YCl₆ solid electrolyte material obtained in Example 2.9;
Fig. 21 is a temperature-dependent ionic conductivity diagram of glass-ceramic phase Li₃YCl₆ solid electrolyte material obtained in Example 2.9;
Fig. 22 is a charge and discharge curve of the all-solid-state LiIn-LiCoO₂ secondary battery in Application Example 2.1.
Fig. 23 is a charge and discharge curve of the all-solid-state LiIn-NMC811 secondary battery in Application Example 2.1;
Fig. 24 is an X-ray diffraction pattern of Li_{1.5}In_{0.53}Cl₃ solid electrolyte material obtained in Example 3.1 and the corresponding structural refinement diagram thereof;
Fig. 25 is a synchrotron radiation X-ray absorption spectrogram of Li_{1.5}In_{0.53}Cl₃ solid electrolyte material obtained in Example 3.1 and the fitting structure model thereof;
Fig. 26 is a diagram showing the crystal structure and atomic distribution of Li_{1.5}In_{0.53}Cl₃ solid electrolyte material obtained in Example 3.1;
Fig. 27 is an electrochemical characterization of Li_{1.5}In_{0.53}Cl₃ solid electrolyte material obtained in Example 3.1. Fig. a is the temperature-dependent impedance curve of the material and the corresponding ionic conductivity thereof, and Fig. b is the voltage window test curve of the material;
Fig. 28 is a charge and discharge curve of the all-solid-state LiIn-LiCoO₂ secondary battery in Application Example 3.1;
Fig. 29 is a charge and discharge curve of the all-solid-state LiIn-NMC811 secondary battery in Application Example 3.1;
Fig. 30 shows the process of forming LiCoO₂ cathode material coated by Li₃InCl₆ in liquid phase of Example 4.1 and the prepared material;
Fig. 31 shows the process of in-situ formation of LiCoO₂ cathode material coated by Li₃InCl₆ in liquid phase of Example 4.2 and the prepared material;
Fig. 32 shows the process of forming NMC532 cathode material coated by Li₃InCl₆ in the organic phase of Example 4.3 and the prepared material;
Fig. 33 shows the process of in-situ formation of NMC532 cathode material coated by Li₃InCl₆ in the organic phase of Example 4.4 and the prepared material;
Fig. 34 shows the process of preparing the organic phase coated electrode material in Example 4.5 and the prepared material;
Fig. 35 shows the process of preparing the organic phase coated electrolyte layer in Example 4.6 and the prepared material.

### Specific Modes for Carrying Out the Embodiments

The following Examples are intended to illustrate the present invention, but are not intended to limit the scope of the present invention. If the specific technology or conditions are not indicated in the Examples, it shall be carried out according to the technology or conditions described in the literature in the art, or according to the product manual. Those reagents or instruments that do not indicate the manufacturer are all conventional products that can be purchased through formal channels.

In the following Examples, the grinding is carried out in a glove box, either manual grinding or machine grinding; the ball milling operation may be carried out in a zirconia ball mill tank, usually a sealed ball mill.

### Example 1.1: Glass-ceramic phase Li₃Y_{1-d}In_{d}Cl₆ additive and the preparation thereof

30 mmol of LiCl (1.29 g), 10-10a mmol of InCl₃ and 10a mmol of YCl₃ were ground, then placed into a zirconia ball milling tank with a ball-to-material ratio of 30:1, and then the ball mill was sealed for 30 hours with a ball milling speed of 550 rpm. The sample obtained after ball milling was the glass-ceramic phase Li₃Y_{1-d}In_{d}Cl₆ additive. In which d is 0, 0.1, 0.2, 0.3, 0.4, 0.5, 0.6, 0.7, 0.8, 0.9 or 1.0.

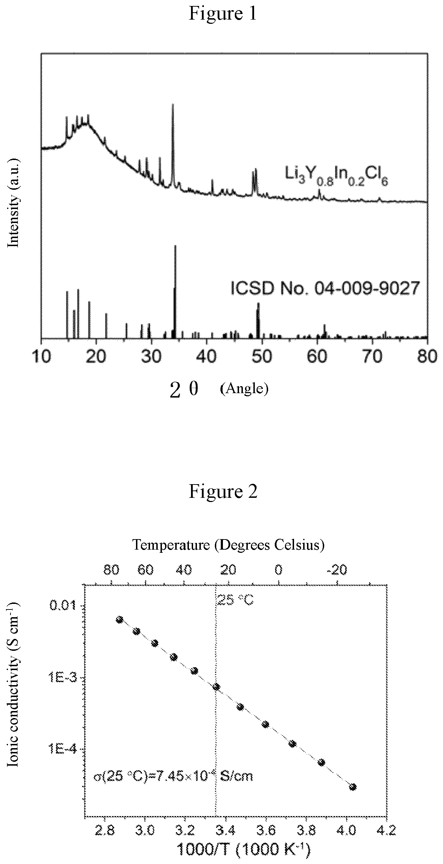

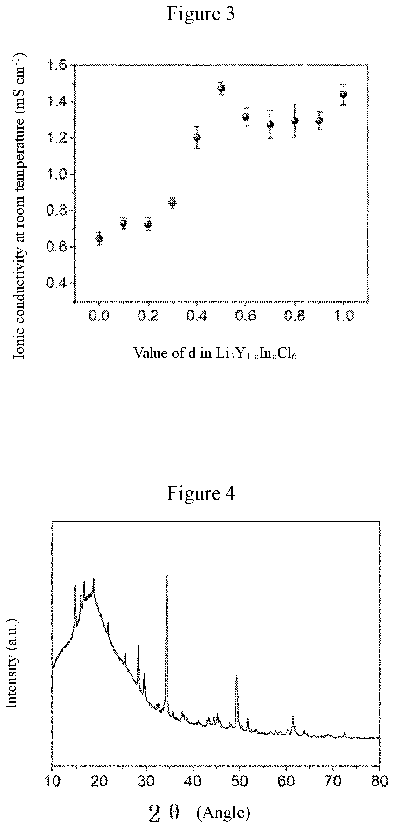

Figs. 1 and 2 are respectively the X-ray diffraction pattern and temperature-dependent ionic conductivity diagram of the glass-ceramic phase Li₃Y_{1-d}In_{d}Cl₆ (d=0.2) prepared in the present Example. Fig. 3 shows the change curve of the above value of d and the ionic conductivity of corresponding products.

### Example 1.2: Crystalline phase Li₃InCl₆ additive and the preparation thereof

30 mmol of LiCl (1.29g) and 10 mmol of InCl₃ (2.21g) were ground, then placed into a zirconia ball milling tank with a ball-to-material ratio of 20:1, and then the ball mill was sealed for 20 hours with a ball milling speed of 550 rpm. The intermediate product obtained after ball milling was reacted in a sealed quartz tube at 450°C for 10 hours. The resulting product was the crystalline phase Li₃InCl₆ additive.

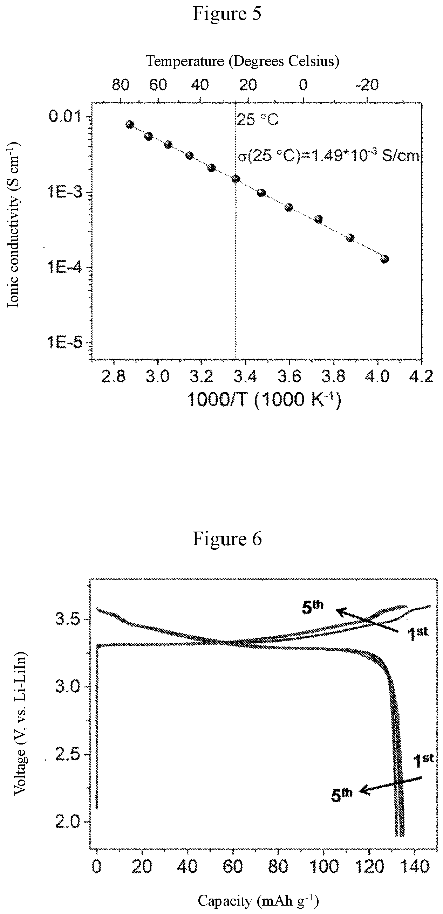

Figs. 4 and 5 are respectively the X-ray diffraction pattern and temperature-dependent ionic conductivity diagram of the crystalline phase Li₃InCl₆ prepared in the present Example.

### Example 1.3 Glass phase Li₃NbCl₈ additive and the preparation thereof

The preparation method is similar to that in Example 1.1, except that the raw materials used were as follows: 30 mmol of LiCl (1.29 g) and 2.7 g of NbCl₅; the ball milling speed was changed to 450 rpm, and the time for ball milling was 10 hours. After the precursor was subjected to ball milling, the glass phase Li₃NbCl₈ additive can be obtained.

### Example 1.4 Glass-ceramic phase Li₃YCl₆ electrode additive material and the preparation thereof

30 mmol of LiCl (1.29g), 10 mmol of YCl₃ (1.95g) and 20 mmol of ammonium chloride (1.08g) were ground and mixed, and then dissolved in tetrahydrofuran solvent. Subsequently, the obtained solution was dried in a vacuum drying oven at 150°C. The obtained intermediate product was calcined at 500°C for 5 hours in argon atmosphere to obtain the glass-ceramic phase Li₃YCl₆ electrode additive material.

### Application Example 1.1: Application of the crystalline phase Li₃InCl₆ electrode additive material prepared in Example 1.2 in all-solid-state LiIn-LiCoO₂, Liln-LiNi_{0.8}Mn_{0.1}Co_{0.1}O₂ (LiIn-NMC811)

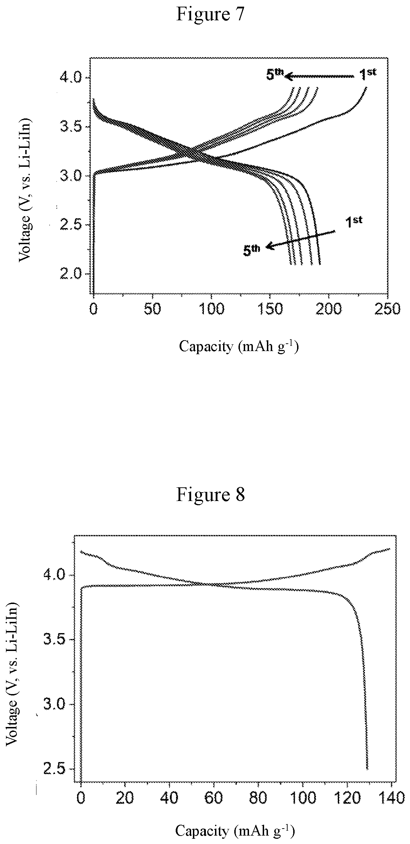

Unmodified LiCoO₂ and NMC811 were used as cathode materials. The cathode material and the crystalline phase Li₃InCl₆ electrode additive material were mixed at a ratio of 70:30 (mass ratio) in a glove box by using a mortar to grind for 20 minutes. The ground material was used as a cathode powder. A thin metal indium sheet was used as anode, and commercial Li₁₀GeP₂S₁₂ electrolyte material was used as electrolyte. 100 mg of Li₁₀GeP₂S₁₂ electrolyte material was put into a mold battery liner with a cross-sectional area of 0.785 square centimeters, and subjected to tableting at a pressure of 200 MPa to obtain the electrolyte layer. Then, 10 mg of cathode powder was added to one side of the electrolyte layer, and spread evenly, and then subjected to the second tableting at a pressure of 350 MPa to laminate the cathode layer and the electrolyte layer together. Subsequently, an indium sheet was placed on the other side as an anode layer. After the whole process was completed, the liner was put into the mold battery, pressed and sealed by tightening the screws. After sealing, all-solid-state LiIn-LiCoO₂ and LiIn-NMC811 secondary batteries can be obtained. Among them, the all-solid-state LiIn-LiCoO₂ battery was measured for charging and discharging at a current density of 100 mA, and a cutoff voltage of 1.9 to 3.6 volts. Fig. 6 is a charge and discharge curve of the battery for 1 to 5 cycles. The charge capacity for the first cycle was 142 mAh/g lithium cobaltate, the discharge capacity for the first cycle was 131 mAh/g lithium cobaltate, and the corresponding coulombic efficiency for the first cycle was 91.7%. After that, the capacity of the battery was stabilized at about 130 mAh/g lithium cobaltate, and the reversibility of the battery cycle was good. Among them, the all-solid LiIn-NMC811 battery was charged and discharged with a current density of 100 µA, and a cutoff voltage of 1.9 to 3.9 volts. Fig. 7 is the charge and discharge curve of the battery in the first cycle, the charge capacity for the first cycle was 231 mAh/g NMC811, the discharge capacity for the first cycle was 192 mAh/g NMC811, and the corresponding t coulombic efficiency for the first cycle was 83.1%.

### Application Example 1.2: Application of crystalline phase Li₃InCl₆ electrode additive material prepared in Example 1.2 in liquid phase Li-LiCoO₂

Unmodified LiCoO₂ was used as cathode material. The cathode material and the crystalline phase Li₃InCl₆ electrode additive material were mixed at a ratio of 90:10 (mass ratio) in a glove box by using a mortar to grind for 20 minutes. The ground material was used as cathode powder. 85 wt% cathode powder, 10 wt% PVDF binder and 5 wt% conductive carbon black were used for stirring and slurrying, and NMP was used as the solvent for slurrying. The obtained slurry was coated on a metal aluminum foil, then dried at 100°C in vacuum to obtain the cathode plate. The thickness of the plate was greater than 400 µm, and the load of single-sided LCO was higher than 20 mg/cm². With lithium sheet as the counter electrode, polyolefin porous membrane (Celgard 2500) as the separator, and the mixed solution of ethylene carbonate (EC) and dimethyl carbonate (DMC) (a volume ratio of 1:1) of LiPF₆ as the electrolyte, the CR2016 battery was assembled in a glove box in argon atmosphere. The electrical performance was tested at a test temperature of 25°C. Fig. 8 is the charge and discharge curve of the battery for the first cycle. The charge capacity for the first cycle was 139 mAh/g LCO, the discharge capacity for the first cycle was 129 mAh/g LCO, and the corresponding coulombic efficiency for the first cycle was 92.8%.

The above experimental result shows that that the lithium secondary battery additive provided by the present invention may improve the electrode ion transmission speed and is compatible with the exist lithium secondary battery electrode materials. The material has high ionic conductivity at room temperature, stable in air and simple in preparation method, and is compatible with the existing electrode materials of a lithium secondary battery. It is expected to solve the problems of slow ion transmission of electrode materials, low load of electrode materials, difficulty in further improving electrode thickness and the like in a lithium secondary battery, so that it is expected to realize the preparation of electrode plate with high energy density and low electrode polarization, and further improve the energy density of the lithium secondary battery.

### Example 2.1: Preparation of Li₄InCl₇ solid electrolyte material in aqueous solution

40 mmol LiCl (1.7 g) and 10 mmol InCl₃ (2.21 g) were weighed in air atmosphere and transferred into a 20 ml glass bottle, subsequently 10 ml deionized water was added for dissolution and mixing. After all the materials were completely dissolved, the glass bottle was placed in an oven at 90°C for drying, and the sample obtained after drying was further placed in a muffle furnace at 260°C for annealing for 5 hours. Samples obtained after annealing were glass-ceramic phase Li₄InCl₇ solid electrolyte materials.

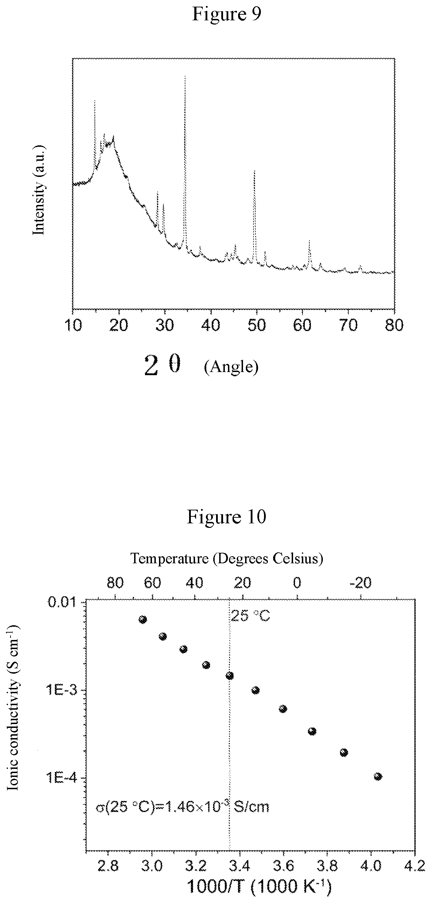

Figs. 9 and 10 are the X-ray diffraction pattern and temperature-dependent ionic conductivity diagram of glass-ceramic phase Li₄InCl₇ solid electrolyte material prepared in the present Example, respectively.

### Example 2.2: Preparation of Li₃InCl₅F solid electrolyte material in aqueous solution

The preparation method is similar to that in Example 2.1, except that 40 mmol of LiCl (1.7 g) precursor was replaced with a mixture of 20 mmol of lithium chloride (0.85 g) and 10 mmol of lithium fluoride (0.26 g). The temperature for annealing was changed to 400°C. The sample obtained after annealing was glass-ceramic phase Li₃InCl₅F solid electrolyte material.

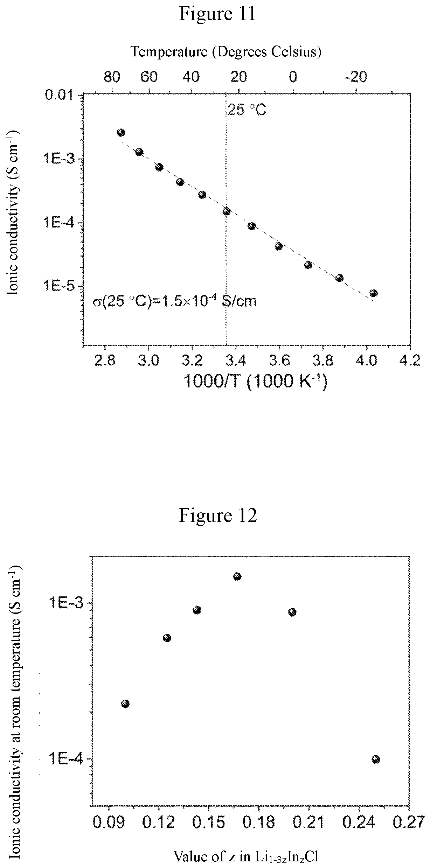

Fig. 11 is a temperature-dependent ionic conductivity diagram of glass-ceramic phase Li₃InCl₅F solid electrolyte material prepared in the present Example.

### Example 2.3: Preparation of various Li_{1-3z}In_{z}Cl (z=0.25, 0.2, 0.167, 0.143, 0.1) solid electrolyte materials in liquid phase environment

LiCl and InCl₃ were mixed according to a ratio of 1-3z:z (z=0.25, 0.2, 0.167, 0.143, 0.1), at the same time, ensure that the feeding of LiCl and InCl₃ was 40 mmol. Then 5 ml of deionized water was added for dissolving. After all the precursors were completely dissolved, the resultant was placed in a drying oven at 100°C for drying. The sample obtained after drying was the glass-ceramic phase Li_{1-3z}In_{z}Cl (0.1≤z≤0.25) solid electrolyte material.

Fig. 12 is a graph showing the relationship between ionic conductivity at room temperature and z of the glass-ceramic phase Li_{1-3z}In_{z}Cl (0.1≤z≤0.25) solid electrolyte material prepared in the present Example.

### Example 2.4: Preparation of the glass-ceramic phase Na₃InCl₄Br₂ solid electrolyte material

10 mmol of NaCl (0.58 g), 10 mmol of NaBr (1.03 g) and 10 mmol of InCl₃ (2.21 g) were weighed under an air atmosphere and transferred into a 20 ml glass bottle, and then 7 ml of deionized water was added for dissolving and mixing. After all the materials were completely dissolved, the glass bottle was placed in an oven at 90°C for drying, and the sample obtained after drying was further placed in a muffle furnace at 350°C for annealing for 5 hours unnder a vacuum environment. The sample obtained after annealing was glass-ceramic phase Na₃InCl₄Br₂ solid electrolyte material.

### Example 2.5: Preparation of glass-ceramic phase Li₃In_{0.8}Y_{0.2}Cl₆ solid electrolyte material

30 mmol of LiCl (1.272 g), 8 mmol of InCl₃ (1.768 g) and 2 mmol of YCl₃ (0.39 g) was weighed under argon atmosphere and transferred into a 20 ml glass bottle, and then 10 ml of deionized water was added for dissolving and mixing. After all the materials were completely dissolved, the glass bottle was placed in an oven at 90°C for drying, and the sample obtained after drying was further placed in a vacuum drying oven at 200°C for reaction. After the reaction, the product obtained was sealed in a quartz glass tube and placed into a muffle furnace for annealing at a temperature of 500°C, for 8 hours. The sample obtained after annealing was glass-ceramic phase Li₃In_{0.8}Y_{0.2}Cl₆ solid electrolyte material.

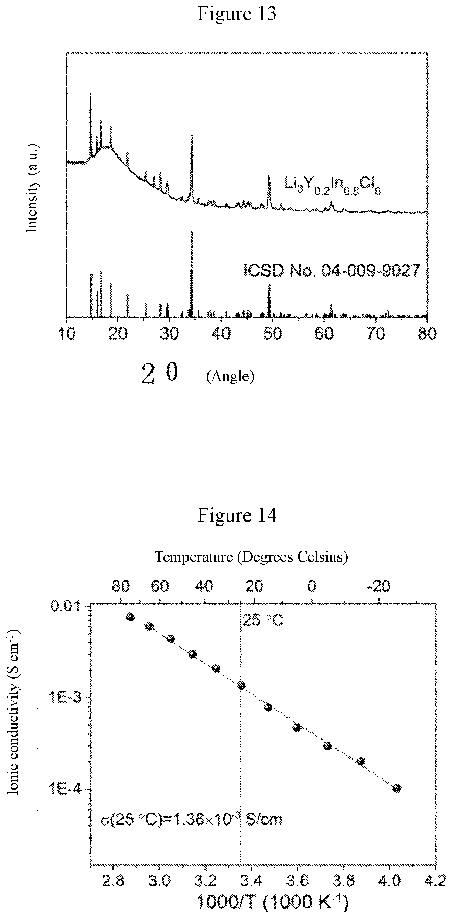

Figs. 13 and 14 are the X-ray diffraction pattern and temperature-dependent ionic conductivity diagram of the glass-ceramic phase Li₃In_{0.8}Y_{0.2}Cl₆ solid electrolyte material prepared in the present Example, respectively.

### Example 2.6: Preparation of glass-ceramic phase Li₂In_{0.1}Zn_{0.9}Cl_{4.1} solid electrolyte material

20 mmol of LiCl (0.848 g), 9mmol of ZnCl₂ (1.224 g) and 1 mmol of InCl₃ (0.221 g) were weighed under argon atmosphere and transferred into a 20 ml glass bottle, and then 5 ml of deionized water was added for dissolving and mixing. After all the materials were completely dissolved, the glass bottle was placed on a heating plate in a fume hood at 90°C for drying, and the obtained sample after drying was further placed in a vacuum drying oven at 200°C for reaction for 5 hours. Subsequently, the resultant was subjected to annealing at 300°C in vacuum atmosphere for 60 minutes, and the obtained sample was a glass-ceramic phase Li₂In_{0.1}Zn_{0.9}Cl_{4.1} solid electrolyte material.

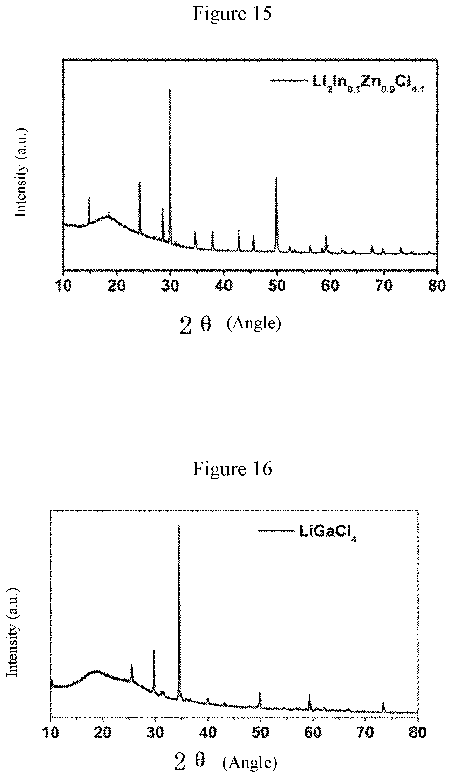

Fig. 15 is an X-ray diffraction pattern of glass-ceramic phase Li₂In_{0.1}Zn_{0.9}Cl_{4.1} solid electrolyte material prepared in the present Example.

### Example 2.7: Preparation of glass-ceramic phase LiGaCl₄ solid electrolyte material

10 mmol of LiCl (0.424 g) and 10 mmol of GaCl₃ (1.76 g) were weighed under argon atmosphere and transferred into a 20 ml glass bottle, and then 3 ml of deionized water was added for dissolving and mixing. After all the materials were completely dissolved, the glass bottle was placed on a heating plate in a fume hood at 90°C for drying, and the sample obtained after drying was further placed in a vacuum drying oven at 200°C for reaction for 5 hours. And the obtained sample was the glass-ceramic phase LiGaCl₄ solid electrolyte material.

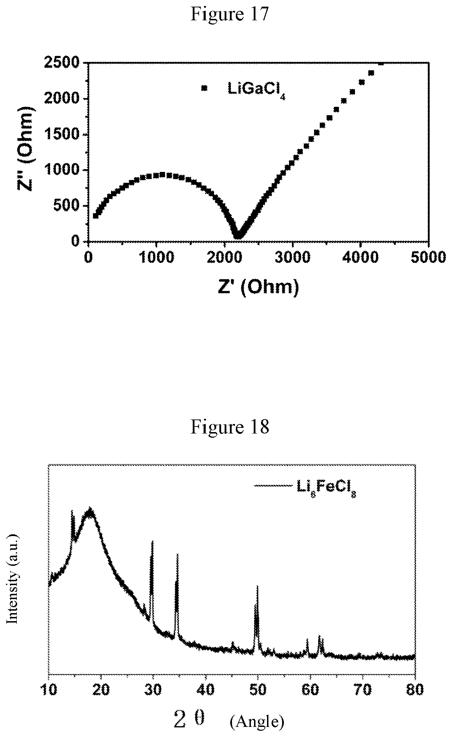

Figs. 16 and 17 are the X-ray diffraction pattern and impedance curve at room temperature of the glass-ceramic phase LiGaCl₄ solid electrolyte material prepared in the present Example, respectively. It can be calculated from Fig. 17 that the ionic conductivity of the material at room temperature is 9*10⁻⁵ S/cm.

### Example 2.8: Preparation of glass-ceramic phase Li₆FeCl₈ solid electrolyte material

30 mmol of LiCl (1.272 g) and 5 mmol of FeCl₂ (0.634 g) were weighed under argon atmosphere and transferred into a 20 ml glass bottle, and then 5 ml of deionized water was added for dissolving and mixing. After all the materials were completely dissolved, the glass bottle was placed in a vacuum box at 90°C for vacuum drying, and the sample obtained after drying was further dehydrated at 200°C for 5 hours. The obtained sample was a glass-ceramic phase Li₆FeCl₈ solid electrolyte material.

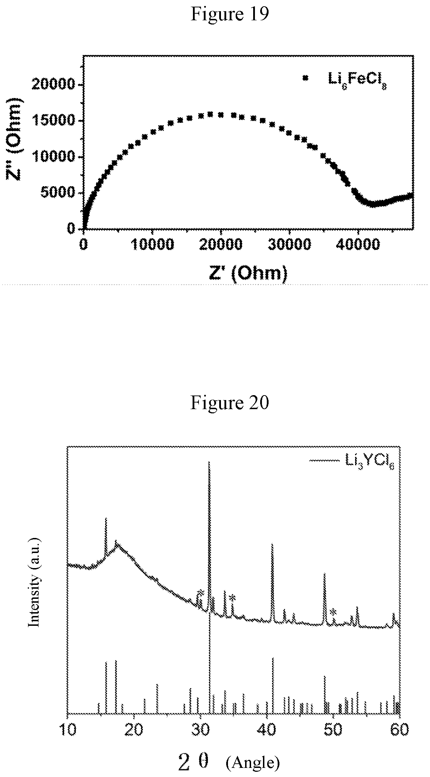

Figs. 18 and 19 are the X-ray diffraction pattern and impedance curve at room temperature of glass-ceramic phase Li₆FeCl₈ solid electrolyte material prepared in the present Example. It can be calculated from Fig. 19 that the ionic conductivity of this material at room temperature is 5*10⁻⁶ S/cm.

### Example 2.9: Preparation of glass-ceramic phase Li₃YCl₆ solid electrolyte material

30 mmol of LiCl (1.272 g) and 10 mmol of YCl₃ (1.953 g) were mixed under argon atmosphere and transferred into a 20 ml glass bottle, and then 5 ml of absolute ethanol was added for dissolving and mixing. After all materials were completely dissolved, the glass bottle was dried in argon at 90°C, and the sample obtained after drying was further dehydrated at 200°C for 5 hours, and then the resultant was subject to annealing at 500°C for 2 hours. The obtained sample was a glass-ceramic phase Li₃YCl₆ solid electrolyte material.

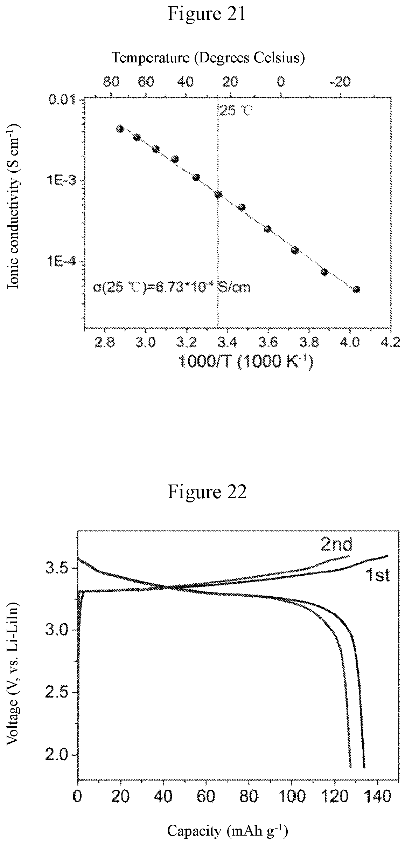

Figs. 20 and 21 are the X-ray diffraction pattern and temperature-dependent ionic conductivity diagram of glass-ceramic phase Li₃YCl₆ solid electrolyte material prepared in the present Example, respectively.

### Example 2.10: Preparation of glass-ceramic phase Li₃BiCl₆ solid electrolyte material

30 mmol of LiCl (1.272 g) and 10 mmol of BiCl₃ (3.15 g) were mixed under argon atmosphere and transferred into a 20 ml glass bottle, and then 10 ml of concentrated hydrochloric acid was added for dissolving and mixing. After all the materials were completely dissolved, the glass bottle was placed on a heating plate in a fume hood at 90°C for drying, and the sample obtained after drying was further placed in a vacuum drying oven at 200°C for reaction for 5 hours. The obtained sample was a glass-ceramic phase Li₃BiCl₆ solid electrolyte material.

### Application Example 2.1: Application of the glass-ceramic phase Li₄InCl₇ solid electrolyte material prepared in Example 2.1 in all-solid-state LiIn-LiCoO₂, Liln-LiNi_{0.8}Mn_{0.1}Co_{0.1}O₂ (LiIn-NMC811)

Unmodified LiCoO₂ and NMC811 were used as cathode materials. The cathode material and the glass-ceramic phase Li₄InCl₇ solid electrolyte material obtained in Example 2.1 were mixed at a ratio of 90:10 (mass ratio) in a manner of manual grinding for 5 minutes under an air atmosphere. The ground sample was placed into a 20 ml glassware bottle, and deionized water of five times the mass of the sample was added for dispersion, and then placed into an ultrasonic instrument for ultrasonic treatment for 5 minutes. After the ultrasonic treatment, the glassware bottle was placed into a vacuum drying oven and dried at 80°C for 12 hours under a vacuum environment. The sample obtained after drying was the cathode powder of the secondary battery. A thin metal indium sheet was used as the anode, and the glass-ceramic phase Li₄InCl₇ solid electrolyte material and the commercial Li₁₀GeP₂S₁₂ electrolyte material were also used as the electrolyte. 50 mg of Li₄InCl₇ solid electrolyte material was put into a mold battery liner with a cross-sectional area of 0.785 square centimeters, and subjected to tabletting at a pressure of 100 MPa to obtain the first electrolyte layer. Subsequently, 50 mg of Li₁₀GeP₂S₁₂ electrolyte material was placed at one end of the first electrolyte layer, and subjected to tabletting at a pressure of 200 Mpa to obtain a double-layer electrolyte layer. Subsequently, 10 mg of cathode powder was added to the end of Li₄InCl₇ electrolyte layer, and after being spread evenly, the resultant was subjected to a third tabletting at a pressure of 350 Mpa to laminate the cathode layer and the electrolyte layer together. Subsequently, an indium sheet was placed at the end of Li₁₀GeP₂S₁₂ electrolyte material as an anode layer. After the whole process was completed, the liner was put into the mold battery, pressed and sealed by tightening the screws. After sealing, all-solid-state LiIn-LiCoO₂ and LiIn-NMC811 secondary batteries can be obtained. Among them, the all-solid-state LiIn-LiCoO₂ battery was measured for charging and discharging at a current density of 100 mA, and a cutoff voltage of 1.9 to 3.6 volts. Fig. 22 is a charge and discharge curve of the battery. Among them, the all-solid-state LiIn-NMC811 battery was charged and discharged with a current density of 100 mA, and a cutoff voltage of 1.9 to 3.9 volts. Fig. 23 is a charge and discharge curve for the first cycle of the battery.

### Application Example 2.2: Application of the glass-ceramic phase Na₃InCl₄Br₂ solid electrolyte material prepared in Example 2.4 in an all-solid-state sodium secondary battery

Unmodified NaCrO₂ was used as cathode material. The cathode material, the glass-ceramic phase Na₃InCl₄Br₂ solid electrolyte material and the conductive carbon black were mixed at a ratio of 80:15:5 (mass ratio) in a glove box by using a mortar to grind for 20 minutes. The ground material was used as cathode powder. A tin sheet was used as an anode, and a glass-ceramic phase Na₃InCl₄Br₂ solid electrolyte material was used as an electrolyte. 100 mg of Na₃InCl₄Br₂ solid electrolyte material was put into a mold battery liner with a cross-sectional area of 0.785 square centimeters, and subjected to tableting at a pressure of 100 MPa to obtain the electrolyte layer. Subsequently, 10 mg of cathode powder was added to one end of the electrolyte layer, and spread evenly, and then subjected to a second tableting at a pressure of 350 MPa to laminate the cathode layer and the electrolyte layer together. Subsequently, a tin sheet is placed at the other end of the electrolyte layer as an anode layer. After the whole process was completed, the liner was put into the mold battery, pressed and sealed by tightening the screws. After sealing, an all-solid-state NaCrO₂/Sn secondary battery can be obtained. The electrical performance was measured at a temperature of 25°C.

The following X-ray diffraction is all measured using copper Kα rays.

The following methods of ionic conductivity were tested by AC impedance, which is as follows: 150 mg of electrolyte material were weighed in the glove box, then subjected to tableting in the mold battery at a pressure of 350 MPa, then the thickness of electrolyte layer was measured and recorded as L, then the resultant was directly assembled into a carbon/electrolyte/carbon symmetrical cell in mold battery, the AC impedance of the battery under open circuit condition was measured, and the obtained impedance value was recorded as R, calculation was performed using the formula of σ=L/(R·A), wherein σ is the ionic conductivity, L is the thickness of the electrolyte layer, R is the impedance value, and A is the electrode area of the electrolyte sheet.

### Example 3.1: Preparation of the Li_{3b-3a}InₐCl₃ (a=0.53, b=1.03) solid electrolyte material

30 mmol of LiCl (1.275 g) and 10 mmol of InCl₃·4H₂O (2.93 g) were weighed in air atmosphere and transferred into a 100 ml glass bottle, subsequently, 20 ml of deionized water was added for dissolving and mixing. After all the materials were completely dissolved, the glass bottle was placed in an oven at 80°C for vacuum drying, and the sample obtained after drying was further dehydrated in a vacuum oven at 200°C for 5 hours. The sample obtained after dehydration was glass-ceramic phase Li_{1.5}In_{0.53}Cl₃ solid electrolyte material.

Fig. 24 is an X-ray diffraction pattern of the glass-ceramic phase Li_{1.5}In_{0.53}Cl₃ solid electrolyte material prepared in the present Example and the corresponding structural refinement diagram thereof.

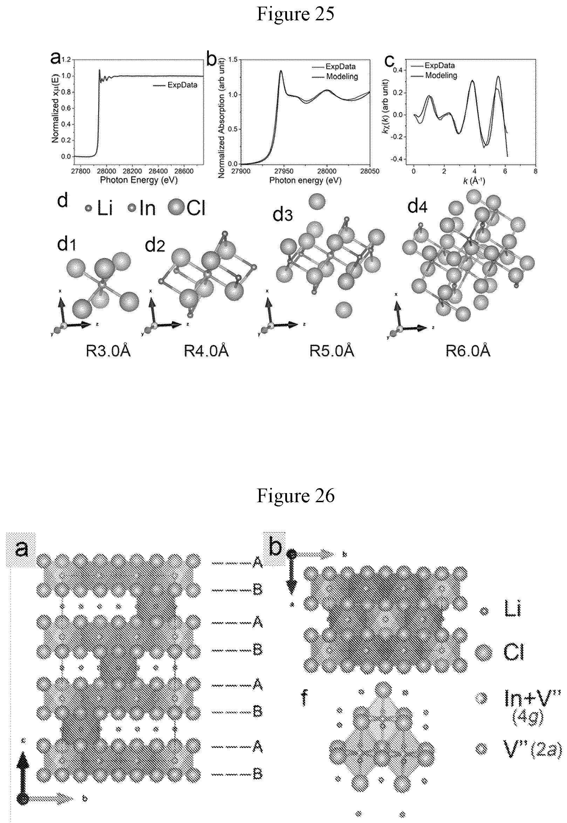

Fig. 25 is a synchrotron radiation X-ray absorption spectrogram of Li_{1.5}In_{0.53}Cl₃ solid electrolyte material prepared in the present Example and the fitting structure model thereof.

According to the above X-ray diffraction and the corresponding structural refinement diagram and synchrotron radiation X-ray absorption spectrogram analysis thereof, it shows that the indium ions in the crystal structure of Li_{1.5}In_{0.53}Cl₃ solid electrolyte material obtained in the present Example have a different arrangement from that reported in literature and database.

According to the crystal structure of Li₃InCl₆ in the Inorganic Crystal Structure Database (Card No. 04-009-9027), the indium ions are arranged at 2 positions of In₁ (0, 0.333, 0) and In₂ (0, 0, 0), with indium ions accounting for 7% at In₁ and 87.5% at In₂, as shown in Table 1 below.

**Table 1: Atomic arrangement of Li₃InCl₆ crystal structure**

| Atom | x | y | z | Site occupation | Position |
|---|---|---|---|---|---|
| Cl1 | 0.2421 | 0.1622 | 0.2388 | 1.000 | 8j |
| Cl2 | 0.2450 | 0.0000 | -0.2338 | 1.000 | 4i |
| In1 | 0.0000 | 0.3333 | 0.0000 | 0.07 | 4g |
| In2 | 0.0000 | 0.0000 | 0.0000 | 0.875 | 2a |
| Li1 | 0.5000 | 0.0000 | 0.5000 | 1.000 | 2d |
| Li2 | 0.0000 | 0.1683 | 0.5000 | 1.000 | 4h |

In the Li_{1.5}In_{0.53}Cl₃ solid electrolyte material prepared in the present Example, all indium ions are arranged at In₁ (0, 0.333, 0) position, accounting for 53%, as shown in Table 2 below.

**Table 2: Crystal structure and atomic distribution of Li_{1.5}In_{0.53}Cl₃ solid electrolyte material prepared in Example 3.1**

| Atom | x | y | z | Site occupation | Position |
|---|---|---|---|---|---|
| Cl1 | 0.2421 | 0.1622 | 0.2388 | 1.000 | 8j |
| Cl2 | 0.2450 | 0.0000 | -0.2338 | 1.000 | 4i |
| In1 | 0.0000 | 0.3333 | 0.0000 | 0.530 | 4g |
| Li1 | 0.5000 | 0.0000 | 0.5000 | 1.000 | 2d |
| Li2 | 0.0000 | 0.1683 | 0.5000 | 1.000 | 4h |

Fig. 26 shows the diagram of crystal structure and atomic distribution of Li_{1.5}In_{0.53}Cl₃ solid electrolyte material prepared in the present Example.

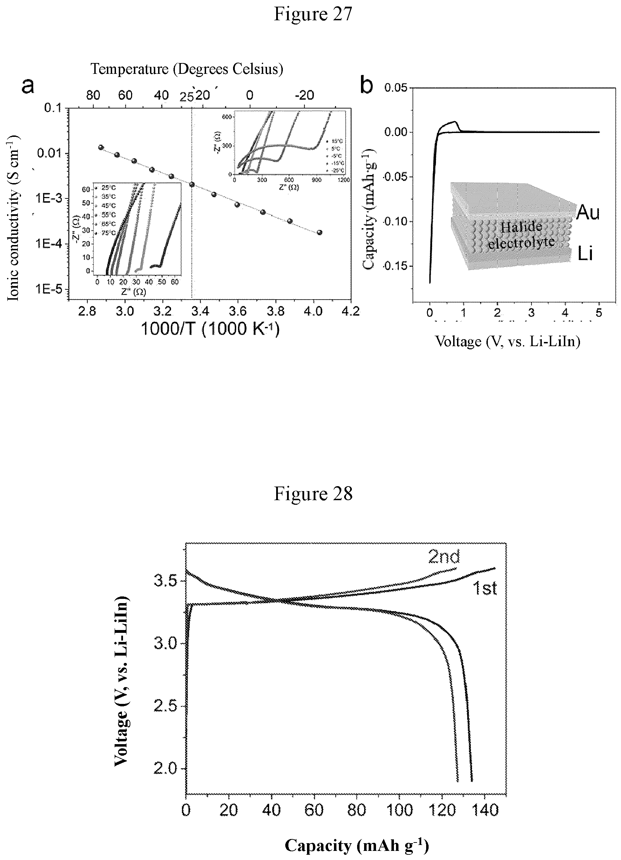

Fig. 27a is a temperature-dependent impedance curve of Li_{1.5}In_{0.53}Cl₃ solid electrolyte material prepared in the present Example and the corresponding ionic conductivity thereof. The ionic conductivity of the material at room temperature is 2 mS/cm. Fig. 27b is the voltage window test curve of Li_{1.5}In_{0.53}Cl₃ solid electrolyte material prepared in the present Example. the test method is carried out by using cyclic voltammetry with Li/electrolyte/Au battery.

### Application Example 3.1: Application of the glass-ceramic phase Li_{1.5}In_{0.53}Cl₃ solid electrolyte material prepared in Example 3.1 in all-solid LiIn-LiCoO₂ and LiIn-LiNi_{0.8}Mn_{0.1}Co_{0.1}O₂ (LiIn-NMC811)

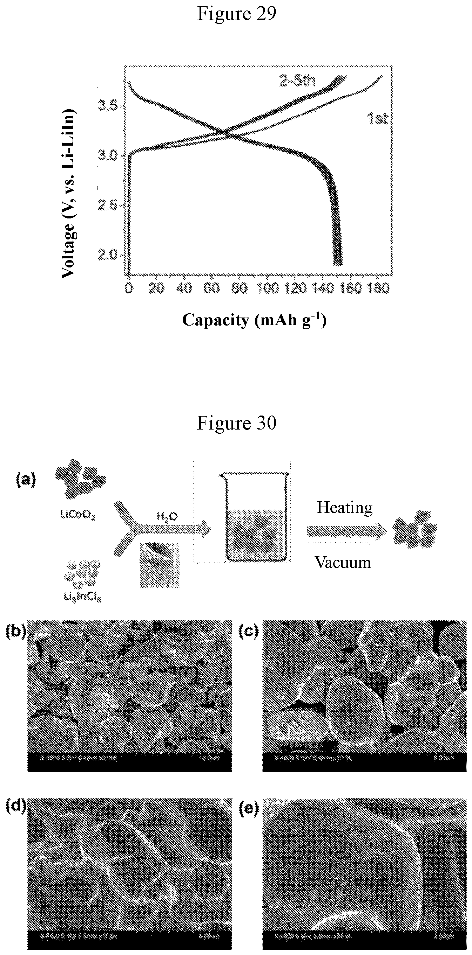

Unmodified LiCoO₂ and NMC811 were used as cathode materials. The cathode material and the glass-ceramic phase Li_{1.5}In_{0.53}Cl₃ solid electrolyte material obtained in Example 3.1 were mixed at a ratio of 70:30 (mass ratio) in a manner of manual grinding for 5 minutes in a glove box, and the obtained sample was the cathode powder of the secondary battery. A metal thin indium sheet was used as anode, and the glass-ceramic phase Li_{1.5}In_{0.53}Cl₃ solid electrolyte material obtained in Example 3.1 and the commercial Li₁₀GeP₂S₁₂ electrolyte material were also used as electrolytes, respectively. 50 mg of Li_{1.5}In_{0.53}Cl₃ solid electrolyte material was put into a mold battery liner with a cross-sectional area of 0.785 square centimeters, and subjected to tabletting at a pressure of 100 MPa to obtain the first electrolyte layer. Subsequently, 50 mg of Li₁₀GeP₂S₁₂ electrolyte material was placed at one end of the first electrolyte layer, and subjected to tabletting at a pressure of 200 Mpa to obtain a double-layer electrolyte layer. Subsequently, 10 mg of cathode powder was added to the end of the Li_{1.5}In_{0.53}Cl₃ electrolyte layer, and after being spread evenly, it was pressed for a third time at a pressure of 350 MPa, and the cathode layer and the electrolyte layer were laminated together. Subsequently, an indium sheet was placed at the end of Li₁₀GeP₂S₁₂ electrolyte material as an anode layer. After the whole process was completed, the liner was put into the mold battery, pressed and sealed by tightening the screws. After sealing, all-solid LiIn-LiCoO₂ and LiIn-NMC811 secondary batteries can be obtained. Among them, the all-solid LiIn-LiCoO₂ battery was charged and discharged at a current density of 100 µA, and a cutoff voltage of 1.9 to 3.6 volts. Fig. 28 is a charge and discharge graph of the all-solid-state LiIn-LiCoO₂ battery. Among them, the all-solid-state LiIn-NMC811 battery was charged and discharged with a current density of 100 µA, and a cut-off voltage of 1.9 to 3.8 volts. Fig. 29 is a charge and discharge graph of the all-solid-state LiIn-NMC811 battery for the first cycle.

The results show that the ion arrangement position of Li_{1.5}In_{0.53}Cl₃ solid electrolyte material prepared in Example 3.1 is different from that of Li₃InCl₆ crystal structure in inorganic crystal structure database (Card No. 04-009-9027), and the electrolyte material has higher ionic conductivity, thus realizing the application of the material in solid-state batteries.

See table 3 for the specific explanation of terms and abbreviations involved in the drawings

| Term/abbreviation | Explanation |
|---|---|
| ExpData | Experimental Data |
| Normalized | Normalized Data |
| Photon Energy | Energy of the Photon |
| Modeling | Model fitting |
| Normalized Absorption | Normalized absorption intensity |
| arb unit | Absorbed energy |
| Current | Electric current |
| Voltage | Potential difference |
| Solid electrolyte | Solid state electrolyte |
| Capacity | Battery capacity |

### Example 4.1: Li₃InCl₆ coated LiCoO₂ cathode material formed in liquid phase

75 mg of Li₃InCl₆ was dissolved in 2 g of water, then 425 mg of LiCoO₂ was added, dried at 100°C, and then transferred to a vacuum oven at 200°C for further dehydration and drying to obtain Li₃InCl₆ coated LiCoO₂. No inert atmosphere protection is required in the whole experiment process.

In Fig. 30, (a) indicates the specific synthesis process; Heating means the condition of heating, and Vacuum means the condition of vacuum; (b) and (c) show SEM photos of LiCoO₂ before coating; (d) and (e) show SEM photos of LiCoO₂ after coating.

### Example 4.2: Li₃InCl₆ coated LiCoO₂ cathode material formed in situ in liquid phase

27.4 mg of LiCl and 47.6 mg of InCl₃ was dissolved in water, and then 425 mg of LiCoO₂ was added, the resultant was evaporated to dryness in a 100°C oven and then transferred to a 200°C vacuum oven to react for 5 hours. The LiCoO₂ coated with Li₃InCl₆ was obtained (the mass ratio of Li₃InCl₆ to LiCoO₂ was 15:85). No inert atmosphere protection is required in the whole experiment process.

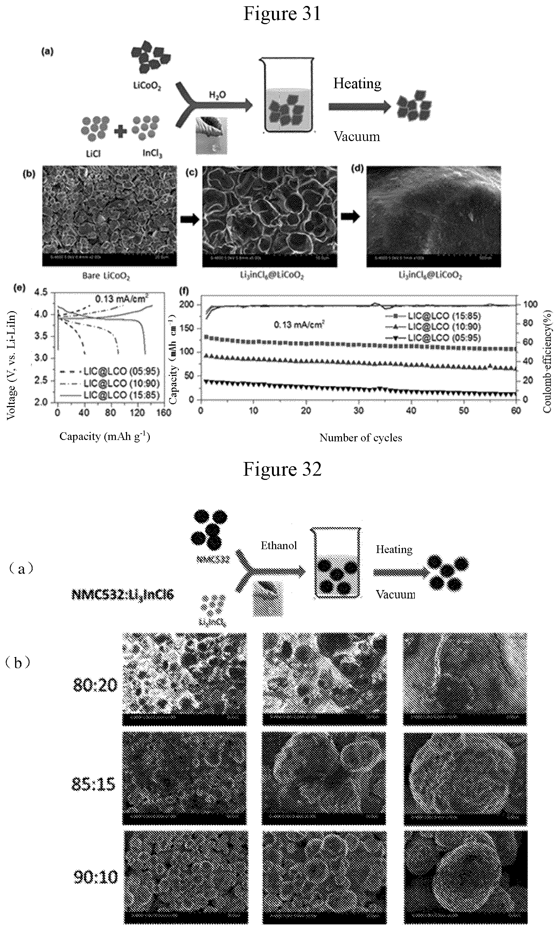

In Fig. 31, (a) indicates the specific synthesis process; Heating means the condition of heating, and Vacuum means the condition of vacuum; (b) is SEM photo of LiCoO₂ before coating; (c) and (d) are SEM photos of coated LiCoO₂; (e) indicates the first charge and discharge curves of LiCoO₂ coated with different contents of Li₃InCl₆; and (f) shows the cyclic stability of LiCoO₂ coated with different contents of Li₃InCl₆. The abscissa in (e) represents the specific discharge capacity, and the ordinate represents the voltage corresponding to the anode of lithium metal; the current density for constant current charge and discharge is 0.13 mA/cm². The abscissa in (f) indicates the number of cycles, the left ordinate indicates the specific discharge capacity, and the right ordinate indicates the coulombic efficiency, the current density of the cycle test is 0.13 mA/cm². The experimental samples in (e) and (f) were Li₃InCl₆ coated LiCoO₂ electrodes with different mass ratios (05:95, 10:10, 15:85) controlled by the above method. Electrochemical test results show that, the first discharge specific capacity of LiCoO₂ electrode containing 15% Li₃InCl₆ is 131 mAh/g. After 60 cycles, it remains at 106.4 mAh/g. The first discharge specific capacity of LiCoO₂ electrode containing 10% Li₃InCl₆ is 91.6 mAh/g. After 60 cycles, it remains at 64.7 mAh/g. The first discharge specific capacity of the LiCoO₂ electrode containing 5% Li₃InCl₆ is 40.1 mAh/g. After 60 cycles, it remains at 12.9 mAh/g.

### Example 4.3: Li₃InCl₆ coated NMC532 cathode material formed in organic phase

75 mg of Li₃InCl₆ and 425 mg of NMC532 were added into 2 g of ethanol, and dispersed ultrasonically for 5 min, then transferred to an oven at 100°C for drying, and then transferred to a vacuum oven at 200°C for further desolvation and drying to obtain NMC532 coated with Li₃InCl₆ (the mass ratio of NMC532 to Li₃InCl₆ was 85:15), and no inert atmosphere protection is required in the whole experiment process.

NMC532 coated with different contents of Li₃InCl₆ was prepared by controlling the mass ratios of NMC532 and Li₃InCl₆ to 80:20 and 90: 10, respectively.

In Fig. 32, (a) indicates the specific synthesis process; Ethanol means ethyl alcohol, Heating means the condition of heating, and Vacuum means the condition of vacuum; (b) indicates the electron micrographs of NMC532 coated with different contents of Li₃InCl₆.

### Example 4.4: Li₃InCl₆ coated NMC532 cathode material formed in situ in organic phase

3 mol of LiCl and 1 mol of InCl₃ (total mass: 150 mg) was dissolved in 2 g of ethanol, then 850 mg of SC-NMC532 (single crystal NMC532) was added, and placed in a 100°C oven for drying by evaporation, then transferred to a 200°C vacuum oven to react for 5 hours to obtain the SC-NMC532 coated with Li₃InCl₆ (the mass ratio of Li₃InCl₆ to SC-NMC532 was 15:85). No inert atmosphere protection is required during the whole experiment process. SC indicates single crystal.

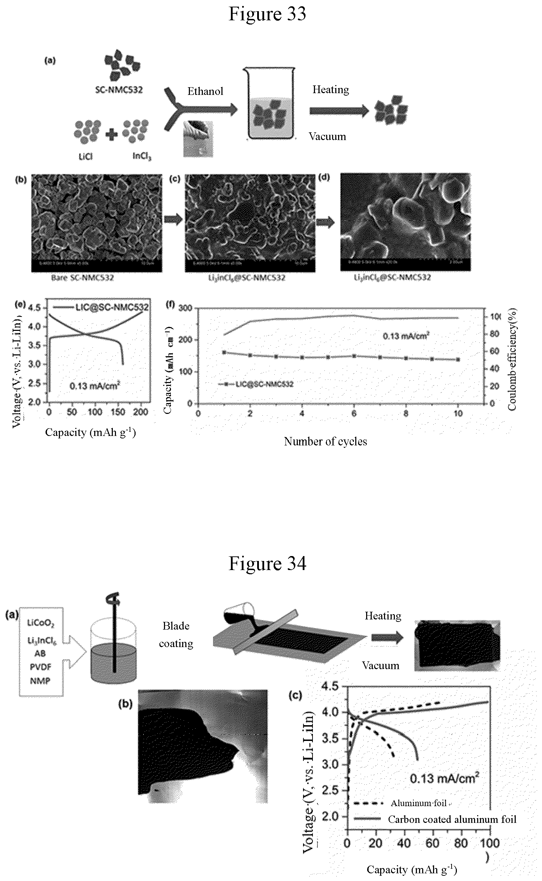

In Fig. 33, (a) shows the specific synthesis process; Ethanol means ethyl alcohol, Heating means the condition of heating, and Vacuum means the condition of vacuum; (b) is SEM photo of SC-NMC532 before coating; (c) and (d) are SEM photos of coated SC-NMC532; (e) indicates the first charge and discharge curves of LiCoO₂ coated with different contents of Li₃InCl₆; (f) shows the cyclic stability of LiCoO₂ coated with different contents of Li₃InCl₆. The abscissa in (e) represents the specific discharge capacity, and the ordinate represents the voltage vs. the anode of lithium metal. The current density of constant current charge and discharge is 0.13 mA/cm². The abscissa in (f) indicates the number of cycles, the left ordinate indicates the specific discharge capacity, and the right ordinate indicates the coulombic efficiency. The current density of the cycle test is 0.13 mA/cm². The experimental samples in (e) and (f) are synthesized Li₃InCl₆ coated SC-NMC532 electrodes controlled according to the above method, wherein the mass ratio of Li₃InCl₆ to SC-NMC532 is 15 wt%:85 wt%, wherein SC indicates single crystal. Electrochemical test results show that SC-NMC532 has a first discharge specific capacity of up to 159 mAh/g in Li₃InCl₆ electrolyte, and the capacity remains at 137.6 mAh/g after 10 cycles.

### Example 4.5: Organic phase coated electrode material

100 mg of PVDF was dissolved in a certain mass of NMP first, then 150 mg of Li₃InCl₆, 850 mg of LiCoO₂ and 100 mg of acetylene black were weighed and added into the PVDF-NMP solution, and the content of NMP was adjusted to prepare the slurry, then the obtained slurry was blade coated on the carbon-coated aluminum foil current collector, and then transferred to a vacuum oven at 110°C for drying to obtain the cathode plate.

In Fig. 34, (a) shows the process of preparing slurry and the process of coating slurry; (b) represents the plate obtained after drying; (c) shows the comparison of electrochemical performance with blade coating of the slurry prepared in the present Example on the carbon-coated aluminum foil and the electrochemical performance with blade coating of the slurry on the conventional aluminum foil. The abscissa of (c) represents the specific discharge capacity, and the ordinate represents the voltage corresponding to the anode of lithium metal. The current density of constant current charge and discharge is 0.13 mA/cm². The experimental samples are aluminum foil (Al) and carbon-coated aluminum foil current collector (C-coated Al), and CC represents current collector. The test results indicate that the coated electrode of carbon-coated aluminum foil exhibits less polarization.

### Example 4.6: Organic phase coated electrolyte layer

200 mg of polymer binder (SEBR) was weighed and dissolved in a certain amount of n-heptane (heptane), and then 1.8 g of Li₃InCl₆ was added, the slurry was prepared by controlling the content of heptane, and then the slurry was blade coated on the copper current collector, and dried in vacuum at 100°C. After drying, the electrolyte layer was peeled off to obtain a thin layer of solid state electrolyte material.

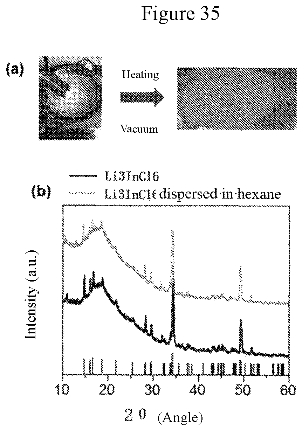

In Fig. 35, (a) shows the prepared ultrathin electrolyte layer; (b) shows the comparison of the XRD results of Li₃InCl₆ before and after heptane dispersion; the results show that there is no phase change before and after the Li₃InCl₆ dispersed by heptane solvent, which proves that there is no chemical reaction and physical dissolution of Li₃InCl₆ in heptane.

### Industrial applicability

The present invention discloses a lithium secondary battery additive, a battery and an electrode. The lithium secondary battery additive provided by the present invention has high ionic conductivity and air stability, and is capable of improving the rapid transmission of electrode ions, increasing the electrode load and thickness, and improving the energy density of the battery. The solid electrolyte material provided by the present invention has high lithium ion conductivity. The electrode and electrolyte thin layer provided by the present invention may significantly improve the ionic conductivity, chemical/electrochemical stability and plasticity. The present invention has wide application prospect and good industrial practicability in the technical field of a secondary battery.

In the following, further beneficial aspects of the subject-matter described herein are listed:
1. A lithium secondary battery additive represented by the following formula:

   Li_{b}MₐX_{c},

   wherein M is one or more selected from B, Al, Ga, In, Y, Sc, Sb, Bi, Nb, Ta, Ti, Zr, V, Cr, Mo, W, Mn, Tc, Re, Fe, Co, Ni, Cu, Ag, Zn, Cd, La, Ce, Pr, Nd, Pm, Sm, Eu, Gd, Tb, Dy, Ho, Er, Tm, Yb and Lu; X is one or more selected from F, Cl, Br and I; 0.2≤b≤6; 0.1≤a≤3; and 1 <c<9.
2. The lithium secondary battery additive according to aspect 1, wherein,
   1≤b≤3; and/or,
   0.2≤a≤1; and/or,
   3≤c≤6;
   preferably, the lithium secondary battery additive is represented by any one of the following formulas,
   Li₃Y_{1-d}In_{d}Cl₆, wherein 0≤d≤1; further, d is selected from 0, 0.1, 0.2, 0.3, 0.4, 0.5, 0.6, 0.7, 0.8, 0.9 or 1.0;
   Li₃InCl₆, or Li₃NbCl₈, or Li₃YCl₆.
3. The lithium secondary battery additive according to aspect 1 or 2, wherein the lithium secondary battery additive is in a form of a glass phase, a glass-ceramic phase or a crystalline phase.
4. A method for preparing the lithium secondary battery additive according to any one of aspects 1 to 3, wherein,
   the lithium secondary battery additive is obtained by mixing the required raw materials or precursors according to the proportion and then grinding; or further prepared into a corresponding phase state by adopting an organic solvent co-dissolution recrystallization method, a heating eutectic method and a method of contacting raw material particles in an insoluble hydrocarbon organic solvent.
5. The preparation method according to aspect 4, wherein, the raw materials or precursors include LiX and MX_{y} precursors, wherein the definitions of M and X are the same as those of any one of aspects 1 to 3; 1≤y≤6, and preferably, 2≤y≤5.
6. The preparation method according to aspect 4 or 5, wherein, during the mixing process of the required raw materials or precursors, a proper amount of cosolvent, fluxing agent or ligand of complex is further added, specifically further added with NH₄Cl, I₂, LiI or S.
7. The preparation method according to any one of aspects 4 to 6, wherein, the obtained glass phase or glass-ceramic phase intermediate product is transformed into glass-ceramic phase or crystalline phase by a heating annealing method;
   wherein, the temperature for heating annealing is preferably 100 to 600°C, more preferably 150 to 350°C; the time for heating annealing is preferably 10 minutes to 24 hours, more preferably 1 to 10 hours;
   further preferably, NH₄Cl, I₂, LiI, S, P or ferrocene is added during the heating annealing to adjust and control the phase and morphology.
8. A lithium secondary battery additive prepared by the method according to any one of aspects 4 to 7.
9. Use of the lithium secondary battery additive according to any one of aspects 1 to 3 and 8 as an electrode additive in a lithium secondary battery, or in the preparation of a lithium secondary battery;
   wherein the lithium secondary battery preferably includes a liquid-phase lithium secondary battery, a half-solid-state lithium secondary battery and an all-solid-state lithium secondary battery.
10. A lithium secondary battery, wherein, at least one of the cathode layer, the electrolyte layer and the anode layer of the battery contains one or more lithium secondary battery additives according to any one of aspects 1 to 3 and 8;
   wherein, the lithium secondary battery preferably includes a liquid-phase lithium secondary battery, a half-solid-state lithium secondary battery and an all-solid-state lithium secondary battery.
11. A solid electrolyte material for a secondary battery represented by the following formula:

   A_{1-3z}In_{z}X;

   wherein, A is one or more selected from Li, Na, K and Cs; X is one or more selected from F, Cl, Br and I; and 0<z≤0.33.
12. The solid electrolyte material according to aspect 11, wherein, 0.1≤z≤0.25;
   preferably, the solid electrolyte material is represented by any one of the following formulas:

   Li₄InCl₇;

   Li₃InCl₅F;

   Li_{1.3z}In_{z}Cl,

   z is 0.25, 0.2, 0.167, 0.143 or 0.1; or,

   Na₃InCl₄Br₂.
13. The solid electrolyte material according to aspect 11 or 12, wherein, wherein In is partially or completely replaced by one or more of the following elements: Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd, and Mg;
   preferably, the solid electrolyte material is represented by any of the following formulas: Li₃In_{0.8}Y_{0.2}Cl₆, or Li₂In_{0.1}Zn_{0.9}Cl_{4.1}, or LiGaCl₄, or Li₆FeCl₈, or Li₃YCl₆, or Li₃BiCl₆.
14. The solid electrolyte material according to any one of aspects 11 to 13, wherein, the solid electrolyte material may be in a form of a glass phase, a glass-ceramic phase or a crystalline phase;
   or, the solid electrolyte material comprises a principal crystalline phase, and the crystalline phase has a distorted rock salt phase structure;
   or, the solid electrolyte material may contain a heterogeneous crystalline phase, which has a different crystal structure arrangement from the principal crystalline phase;
   or, the solid electrolyte material may contain an amorphous phase.
15. A preparation method of a solid electrolyte material according to any one of aspects 11 to 14, wherein the preparation is carried out by a liquid phase method; the raw materials or precursors used include but are not limited to AX, InX₃ and MXₐ; wherein the definitions of A and X are the same as those of any one of aspects 11 to 14; M is one or more of Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd and Mg; and 2≤a≤4;
   preferably, the raw materials or precursors used are hydrates or solutions of the AX, InX₃ or MXₐ; or, preferably, the raw materials or precursors used are precursors of the AX, InX₃ or MXₐ that can dissociate or react in liquid phase with equivalent ionic effects, and the precursors include but are not limited to carbonates and bicarbonates;
   or, preferably, HCl and NH₄Cl are appropriately added as hydrolysis inhibitors or complexing agents in the preparation process of the liquid phase method.
16. The preparation method according to aspect 15, characterized by comprising: dissolving the required raw materials or precursors in a certain proportion in the liquid phase, wherein the mass ratio of the required raw materials or precursors to the liquid phase is 1:0.5 to 1: 15, preferably 1:2 to 1:5;
   further preferably, the liquid phase is deionized water or an organic solvent or a mixed solvent of organic solvent/water; more preferably, the organic solvent is ethanol.
17. The preparation method according to aspect 15 or 16, wherein an annealing treatment may be carried out after drying in the liquid phase method, and the temperature for annealing is 100 to 600°C, preferably 120 to 500°C;
   preferably, the annealing is performed in an air atmosphere, an inert gas atmosphere or a vacuum atmosphere.
18. The solid electrolyte material prepared by the method according to any one of aspects 15 to 17.
19. Use of the solid electrolyte material according to any one of aspects 11 to 14 and 18 in the preparation of a secondary battery, wherein the secondary battery comprises a lithium secondary battery and a sodium secondary battery.
20. A secondary battery comprising a cathode (layer), an anode (layer), and an electrolyte layer between the cathode (layer) and the anode (layer); at least one of the cathode (layer), the anode (layer) and the electrolyte layer includes one or more solid electrolyte materials of any one of aspects 11 to 14 and 18; wherein the secondary battery comprises a lithium secondary battery and a sodium secondary battery.
21. A solid electrolyte material, wherein,
   the solid electrolyte material has the composition represented by Li_{3b-3a}InₐCl₃, wherein 0.2≤a≤0.8, and 0.9≤b≤1.15;
   the solid electrolyte material further has a first crystalline phase which has peaks at positions of 2θ=14.6°±0.15°, 16.7°±0.15° and 34.3°±0.15° in X-ray diffraction measurement using copper Kα rays.
22. The solid electrolyte material according to aspect 21, wherein, in the first crystalline phase, the X-ray intensity of the (001) plane in the crystal structure is set to I(001), and the X-ray intensity of the (131) plane in the crystal structure is set to I(131), wherein, I(001)/I(131)>0.6 is satisfied, preferably, I(001)/I(131)>0.8.
23. The solid electrolyte material according to aspect 21 or 22, wherein, in the first crystalline phase, the X-ray intensity of the (001) plane in the crystal structure is set to I(001), and the X-ray intensity of the (110) plane in the crystal structure is set to I(110), wherein, I(110)/I(001)<0.85 is satisfied, preferably, I(110)/I(001)<0.65.
24. The solid electrolyte material according to any one of aspects 21 to 23, characterized by further comprising a heterogeneous crystalline phase having a peak at a position of 2θ=10.8°±0.2° in X-ray diffraction measurement using copper Kα rays;
   preferably, the heterogeneous crystalline phase has a different crystal structure from the first crystalline phase, and the heterogeneous crystalline phase is interposed between the first crystalline phase.
25. The solid electrolyte material according to any one of aspects 21 to 24, characterized by further comprising an amorphous phase; preferably, the amorphous phase is interposed between the first crystalline phase.
26. The solid electrolyte material according to any one of aspects 21 to 25, wherein, 0.3≤a≤0.7, and 0.95≤b≤1.10; preferably, a is 0.53 and b is 1.03.
27. The solid electrolyte material according to any one of aspects 21 to 26, characterized by having an ionic conductivity of more than 10-3 S/cm; preferably, an ionic conductivity of 0.7 to 2.5 mS/cm, or an ionic conductivity of 1.0 to 2.0 mS/cm.
28. The solid electrolyte material according to any one of aspects 21 to 27, characterized by having a composition represented by Li_{1.5}In_{0.53}Cl₃; preferably, the ionic conductivity of the material under the condition of room temperature is 2 mS/cm.
29. The solid electrolyte material according to any one of aspects 21 to 28, wherein, the X-ray diffraction pattern of the solid electrolyte material is shown in Figure 24.
30. An all-solid-state lithium battery, characterized by having a cathode active material layer, an anode active material layer and a solid electrolyte layer formed between the above cathode active material layer and the above anode active material layer, wherein at least one of the cathode active material layer, the anode active material layer and the solid electrolyte layer includes the solid electrolyte material according to any one of aspects 21 to 29.
31. An electrode, characterized by comprising a solid electrolyte material, an electrode material, a conductive agent and a binder; wherein,
   the solid electrolyte material is LiₐMX_{b}, M is one or more of Al, Ga, In, Sc, Y and La element, X is one or more of F, Cl and Br, 0≤a≤10, and 1≤b≤13; preferably, the solid electrolyte material is one or more selected from Li₃InCl₆, Li₃YCl₆, Li₃YBr₆, Li₃HoCl₆ and Li₃ScCl₆; or,
   the solid electrolyte material has the composition represented by Li_{3b-3a}InₐCl₃, wherein 0.2≤a≤0.8, and 0.9≤b≤1.15; the solid electrolyte material further has a first crystalline phase, the first crystalline phase has peaks at positions of 2θ =14.6° ±0.15° , 16.7° ±0.15° and 34.3 ° ± 0.15 ° in X-ray diffraction measurement using copper Kα rays; preferably, 0.3≤a≤0.7, and 0.95≤b≤1.10; and more preferably, a is 0.53, and b is 1.03.
32. The electrode according to aspect 31, wherein, the solid electrolyte material is represented by Li_{3b-3a}InₐCl₃,
   in the first crystalline phase, the X-ray intensity of the (001) plane in the crystal structure is set to I(001), and the X-ray intensity of the (131) plane in the crystal structure is set to I(131), wherein, I(001)/I(131)>0.6 is satisfied; preferably, I(001)/I(131)>0.8; and/or,
   in the first crystalline phase, the X-ray intensity of the (001) plane in the crystal structure is set to I(001), and the X-ray intensity of the (110) plane in the crystal structure is set to I(110), wherein, I(110)/I(001)<0.85 is satisfied; preferably, I(110)/I(001)<0.65.
33. The electrode according to aspect 31 or 32, wherein, the solid electrolyte material represented by Li_{3b-3a}InₐCl₃ further comprises a heterogeneous crystalline phase, and the heterogeneous crystalline phase has a peak at a position of 2θ=10.8°±0.2° in X-ray diffraction measurement using copper Kα rays;
   preferably, the heterogeneous crystalline phase has a different crystal structure from the first crystalline phase, and the heterogeneous crystalline phase is interposed between the first crystalline phase.
34. The electrode according to any one of aspects 31 to 33, wherein, the solid electrolyte material represented by Li_{3b-3a}InₐCl₃ further comprises an amorphous phase; and preferably, the amorphous phase is interposed between the first crystalline phase.
35. The electrode according to any one of aspects 31 to 34, wherein, the X-ray diffraction pattern of the solid electrolyte material represented by Li_{3b-3a}InₐCl₃ is shown in Fig. 24.
36. The electrode according to any one of aspects 31 to 35, wherein, the electrode material is wrapped in the solid electrolyte material; wherein the weight ratio of the electrode material to the solid electrolyte material is preferably (95:5) to (70:30), more preferably 85:15.
37. The electrode according to any one of aspects 31 to 36, wherein, the content of electrode material in the electrode is 50wt% to 98wt%, and/or the content of solid electrolyte material is 2wt% to 50wt%, and/or the content of conductive agent is 1wt% to 10wt%, and/or the content of binder is 1wt% to 10wt%.
38. The preparation method of the electrode according to any one of aspects 31 to 37, characterized by comprising dissolving the solid electrolyte material or the precursor thereof in water, then adding the electrode material, uniformly mixing, drying, and further vacuum dewatering and drying; or the preparation method comprises dissolving the solid electrolyte material or the precursor thereof and the electrode material in an organic solvent, ultrasonically dispersing, drying, and then further vacuum desolventizing and drying.
39. An electrolyte thin layer, characterized by comprising a solid electrolyte material and a binder; wherein the solid electrolyte material is the same as the solid electrolyte material according to any one of aspects 31 to 37;
   preferably, the content of the solid electrolyte material is 20wt% to 100wt%, more preferably 45wt% to 99wt%; the content of the binder is 0 to 80wt%, more preferably 1wt% to 55wt%.
40. The preparation method of the electrolyte thin layer according to aspect 39, characterized by comprising dissolving the binder in a solvent, then adding a solid electrolyte material or the precursor thereof and a conductive agent to prepare a slurry, coating the slurry on a current collector or a flexible substrate, drying, and then peeling off from the current collector or the flexible substrate.
41. A secondary battery, characterized by comprising the electrode according to any one of aspects 31 to 37 or the electrolyte thin layer according to aspect 39; the secondary battery is preferably a lithium/lithium ion secondary battery.

## Claims

1. A solid electrolyte material for a secondary battery represented by the following formula:
A_{1-3z}In_{z}X;
wherein, A is one or more selected from Li, Na, K and Cs; X is one or more selected from F, Cl, Br and I; and 0<z≤0.33.

2. The solid electrolyte material according to claim 1, wherein, 0.1≤z≤0.25;
preferably, the solid electrolyte material is represented by any one of the following formulas:
Li₄InCl₇;
Li₃InCl₅F;
Li_{1.3z}In_{z}Cl,
z is 0.25, 0.2, 0.167, 0.143 or 0.1; or,
Na₃InCl₄Br₂.

3. The solid electrolyte material according to claim 1 or 2, wherein, wherein In is partially or completely replaced by one or more of the following elements: Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd, and Mg;
preferably, the solid electrolyte material is represented by any of the following formulas: Li₃In_{0.8}Y_{0.2}Cl₆, or Li₂In_{0.1}Zn_{0.9}Cl_{4.1}, or LiGaCl₄, or Li₆FeCl₈, or Li₃YCl₆, or Li₃BiCl₆.

4. The solid electrolyte material according to any one of claims 1 to 3, wherein, the solid electrolyte material may be in a form of a glass phase, a glass-ceramic phase or a crystalline phase;
or, the solid electrolyte material comprises a principal crystalline phase, and the crystalline phase has a distorted rock salt phase structure;
or, the solid electrolyte material may contain a heterogeneous crystalline phase, which has a different crystal structure arrangement from the principal crystalline phase;
or, the solid electrolyte material may contain an amorphous phase.

5. A preparation method of a solid electrolyte material according to any one of claims 1 to 4, wherein the preparation is carried out by a liquid phase method; the raw materials or precursors used include but are not limited to AX, InX₃ and MXₐ; wherein the definitions of A and X are the same as those of any one of claims 1 to 4; M is one or more of Al, Ga, Sc, Y, La, Ce, Pr, Nd, Pm, Sm, Eu, Gd, Tb, Dy, Ho, Er, Tm, Yb, Lu, Fe, Bi, Sb, Cr, Co, Zr, Zn, Cd and Mg; and 2≤a≤4;
preferably, the raw materials or precursors used are hydrates or solutions of the AX, InX₃ or MXₐ; or, preferably, the raw materials or precursors used are precursors of the AX, InX₃ or MXₐ that can dissociate or react in liquid phase with equivalent ionic effects, and the precursors include but are not limited to carbonates and bicarbonates;
or, preferably, HCl and NH₄Cl are appropriately added as hydrolysis inhibitors or complexing agents in the preparation process of the liquid phase method.

6. The preparation method according to claim 5, **characterized by** comprising: dissolving the required raw materials or precursors in a certain proportion in the liquid phase, wherein the mass ratio of the required raw materials or precursors to the liquid phase is 1:0.5 to 1: 15, preferably 1:2 to 1:5;
further preferably, the liquid phase is deionized water or an organic solvent or a mixed solvent of organic solvent/water; more preferably, the organic solvent is ethanol.

7. The preparation method according to claim 5 or 6, wherein an annealing treatment may be carried out after drying in the liquid phase method, and the temperature for annealing is 100 to 600°C, preferably 120 to 500°C;
preferably, the annealing is performed in an air atmosphere, an inert gas atmosphere or a vacuum atmosphere.

8. A secondary battery comprising a cathode (layer), an anode (layer), and an electrolyte layer between the cathode (layer) and the anode (layer); at least one of the cathode (layer), the anode (layer) and the electrolyte layer includes one or more solid electrolyte materials of any one of claims 1 to 4; wherein the secondary battery comprises a lithium secondary battery and a sodium secondary battery.
